# FASCICULE DE BREVET EUROPEEN

(11) **EP 2 491 046 B1**
(45) Date de publication et mention de la délivrance du brevet: **15.07.2015**
(21) Numéro de dépôt: 10781927.8
(22) Date de dépôt: 06.10.2010
(51) Int. Cl.: C07F 3/00, C07F 5/00, C07F 5/06, C07F 19/00

(54) **PROCEDE DE PREPARATION DE SOLIDES FONCTIONNALISES HYBRIDES A MATRICE ORGANIQUE-INORGANIQUE PORTANT UN CYCLE TRIAZOLE**
VERFAHREN ZUR HERSTELLUNG ORGANISCHER/ANORGANISCHER FUNKTIONALISIERTER HYBRIDFESTSTOFFE MIT EINEM TRIAZOLRING
METHOD FOR PREPARING ORGANIC/INORGANIC HYBRID FUNCTIONALIZED SOLIDS HAVING A TRIAZOLE RING

(30) Priorité: 23.10.2009 FR 0905107
(43) Date de publication de la demande: 29.08.2012
(73) Titulaire: IFP Energies nouvelles, 92852 Rueil-Malmaison Cedex (FR); CNRS, 75794 Paris Cedex 16 (FR); Université Claude Bernard Lyon 1, 69622 Villeurbanne Cedex (FR)
(72) Inventeur: SAVONNET, Marie, F-69001 Lyon (FR); FARRUSSENG, David, F-69380 Belmont D'azegues (FR); PINEL, Catherine, F-69007 Lyon (FR); BAZER-BACHI, Delphine, F-69230 St-genis-laval (FR); BATS, Nicolas, F-69320 Feyzin (FR); LECOCQ, Vincent, F-69530 Orlienas (FR)
(86) Numéro de dépôt international: PCT/FR2010/000668
(87) Numéro de publication internationale: WO 2011/048281

(56) Documents cités:
- SAVONNET, M. ET AL.: "Generic Postfunctionalization Route from Amino-Derived Metal-Organic Frameworks", JOURNAL OF THE AMERICAN CHEMICAL SOCIETY, vol. 132, no. 13, 7 avril 2010 (2010-04-07), pages 4518-4519, XP002584326,
- WANG, Z. ET AL.: "Accessing postsynthetic modification in a series of metal-organic frameworks and the influence of framework topology on reactivity", INORGANIC CHEMISTRY, vol. 48, 2009, pages 296-306, XP002584327, cité dans la demande

## Description

### Domaine de l'invention

L'invention concerne le domaine de la fonctionnalisation de matériaux hybrides cristallisés à matrice organique-inorganique en vue de l'obtention de matériaux fonctionnalisés présentant au moins une fonction réactive, laquelle pourra par exemple réagir de manière sélective au contact de certains composés et ainsi être mise à profit dans certaines applications. Plus précisément, la présente invention concerne un nouveau procédé de préparation de matériaux fonctionnalisés hybrides à matrice organique-inorganique. Ces matériaux fonctionnalisés sont obtenus à partir de matériaux hybrides cristallisés à matrice organique-inorganique (non fonctionnalisés) et présentant une fonction -NH₂. Les matériaux non fonctionnalisés de départ sont appelés dans la suite de la description MOF-NH₂. Les matériaux fonctionnalisés préparés selon le procédé de l'invention présentent une structure cristalline identique à celle des matériaux MOF-NH₂ dont ils sont issus par une méthode de fonctionnalisation post-synthèse.

### État de l'art

La modification de matériaux par fonctionnalisation est une étape souvent nécessaire pour l'élaboration de solides possédant les propriétés adéquates pour une application donnée. En effet, il peut être souhaitable d'améliorer les propriétés physico-chimiques d'un matériau, en modifiant sa surface par exemple, afin que les nouvelles propriétés obtenues après modifications soient plus appropriées pour des applications en séparation ou en catalyse. L'un des moyens couramment employé pour modifier la surface d'un matériau consiste à faire réagir les groupements fonctionnels initialement présents à sa surface par des entités possédant les fonctions souhaitées pour l'application envisagée. Les fonctions présentes à la surface d'un matériau peuvent être des groupements hydroxyles (-OH) ou tout autre groupement (amino -NH₂ ou -NH- par exemple) que l'on souhaite modifier afin d'orienter la réactivité chimique de la surface du matériau. Les réactifs employés posséderont les fonctionnalités nécessaires pour réagir avec les groupes présents initialement à la surface du matériau, et le résultat de la réaction sera un nouveau groupement chimique possédant la réactivité désirée. Un exemple d'une telle transformation consiste à faire réagir les groupements hydroxyles de la surface d'une silice par un silane portant une fonction amine (D. Brunel, Microporous and Mesoporous Materials, 1999, 27, 329-344). Ainsi, la fonction hydroxyle est transformée en fonction amine plus apte à catalyser des réactions basiques ou à capter du CO₂ par exemple. Cette méthodologie est applicable à tout matériau possédant initialement des fonctions réactives. Ces matériaux peuvent être des oxydes, des zéolithes ou encore des matériaux hybrides organiques/inorganiques, encore appelés polymères de coordination.

Ces polymères de coordination, dont les premiers ont été décrits dans les années 1960, font l'objet d'un nombre croissant de publications. En effet, l'effervescence autour de ces matériaux a permis d'atteindre une diversité structurale avancée en peu de temps (Férey G., l'actualité chimique, janvier 2007, n°304). Conceptuellement, les solides hybrides poreux à matrice mixte organique-inorganique sont assez semblables aux solides poreux à squelette inorganique. Comme ces derniers, ils associent des entités chimiques en donnant naissance à une porosité. La principale différence réside dans la nature de ces entités. Cette différence est particulièrement avantageuse et est à l'origine de toute la versatilité de cette catégorie de solides hybrides. En effet, la taille des pores devient, par l'utilisation de ligands organiques, ajustable par le biais de la longueur de la chaîne carbonée desdits ligands organiques. La charpente qui, dans le cas des matériaux poreux inorganiques, ne peut accepter que quelques éléments (Si, Al, Ge, Ga, éventuellement Zn) peut, dans ce cas, accueillir tous les cations à l'exception des alcalins. Pour la préparation de ces matériaux hybrides, aucun agent structurant spécifique n'est requis, le solvant joue cet effet à lui seul.

Il apparaît donc clairement que cette famille de matériaux hybrides permet une multiplicité de structures et par conséquent comprend des solides finement adaptés aux applications qui leur sont destinées.

Les polymères de coordination comprennent au moins deux éléments appelés connecteurs et ligands dont l'orientation et le nombre des sites de liaisons sont déterminants dans la structure du matériau hybride. De la diversité de ces ligands et connecteurs naît, comme on l'a déjà précisé, une immense variété de matériaux hybrides.

Par ligand, on désigne la partie organique du matériau hybride. Ces ligands sont, le plus souvent, des di- ou tri-carboxylates ou des dérivés de la pyridine. Quelques ligands organiques fréquemment rencontrés sont représentés ci-après : bdc = benzène-1,4-dicarboxylate, btc = benzène-1,3,5-tricarboxylate, ndc = naphtalène-2,6-dicarboxylate, bpy = 4,4'-bipyridine, hfipbb = 4,4'-(hexafluororisopropylidene)-bisbenzoate, cyclam = 1,4,8,11-tetraazacyclotetradecane.

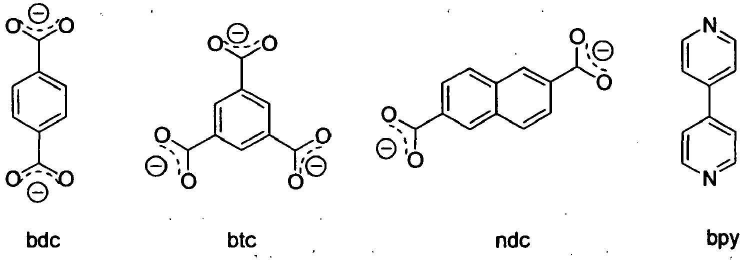

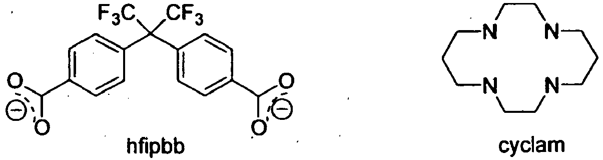

Par connecteur, on désigne l'entité inorganique du matériau hybride. Il peut s'agir d'un cation seul, d'un dimère, trimère ou tétramère ou encore d'une chaîne ou d'un plan.

Les équipes de Yaghi et Férey ont ainsi décrit un nombre important de nouveaux matériaux hybrides (série des MOF - " Metal Organic Framework " - et série des MIL - " Matériaux de l'Institut Lavoisier " - respectivement). De nombreuses autres équipes ont suivi cette voie et aujourd'hui le nombre de nouveaux matériaux hybrides décrits est en pleine expansion. Le plus souvent, les études visent à mettre au point des structures ordonnées, présentant des volumes poreux extrêmement importants, une bonne stabilité thermique et des fonctionnalités chimiques ajustables.

Par exemple, Yaghi *et al*. décrivent une série de structures à base de bore dans la demande de brevet US 2006/0154807 et indiquent leur intérêt dans le domaine du stockage des gaz. Le brevet US 7.202.385 divulgue un récapitulatif particulièrement complet des structures décrites dans la littérature et illustre parfaitement la multitude de matériaux existant déjà à ce jour.

La préparation de matériaux hybrides à matrice organique-inorganique présentant une fonction organique réactive (MOF greffé) peut être mise en oeuvre par deux voies principales : la fonctionnalisation par auto-assemblage et la fonctionnalisation par post-modification. La fonctionnalisation par auto-assemblage est réalisée par la mise en présence d'un ligand organique ayant la fonction réactive (greffon) désirée et d'un composé inorganique ayant le rôle de connecteur. Cette méthode de fonctionnalisation est souvent difficile à mettre en oeuvre en raison des problèmes liés à la solubilisation et à la réactivité des ligands fonctionnalisés. En particulier, les ligands portant une fonction -OH, -COOH ou -NH₂ risquent d'interagir avec le composé inorganique (connecteur) conduisant alors à des solides non-isostructuraux au MOF de référence non greffé. La fonctionnalisation par post-modification est une méthode alternative intéressante qui ne présente pas les limites de la fonctionnalisation par auto-assemblage. La fonctionnalisation par post-modification consiste à modifier directement la fonction organique d'au moins un type de ligand présent dans le MOF par une réaction chimique (greffage), plus précisément à substituer la fonction organique initiale par une fonction organique dont la réactivité est préférée pour une application ultérieure. Cette méthode suppose la présence sur le MOF initial d'une fonction organique accessible et réactive pour le greffage. Dans la littérature, les matériaux hybrides organiques-inorganiques portant un ligand avec une fonction amino -NH₂ tel que le DMOF-1-NH₂ (Z. Q. Wang ; K. K. Tanabe, S. M. Cohen, Inorganic Chemistry, 2009, 48, 296-306) sont décrits comme de bons supports pour le greffage de nombreuses fonctions, notamment les aldéhydes, les isocyanates et les anhydrides d'acide.

La méthode par post-modification permet de mettre en oeuvre des méthodes généralisables où le degré de basicité et la balance hyprophobicité/hydrophilicité peuvent être ajustés par post-fonctionnalisation. L'objectif est donc d'établir une méthode de greffage facile et généralisable à de nombreux groupes, tels que les alcanes, les amines, les alcools, les thiols, les aldéhydes, etc dans des conditions douces sans libération de sous-produits susceptibles de rester bloqués dans les pores. Le concept de "click chemistry" (H. C. Kolbn M.G. Finn, K. B. Sharpless, Angewandte Chemie, 2001, 40, 2004-2021) introduit en 2001 par K. Barry Sharpless semble répondre à ces critère car il consiste à générer rapidement et efficacement, dans des conditions douces, des produits de synthèse par association de petites unités moléculaires. Cette méthode est décrite comme efficace pour la fonctionnalisation d'une silice mésoporeuse (A. Schlossbauer, D. Schaffert, J. Kecht, E. Wagner, T. Bein, J. Am. Chem. Soc., 2008, 130 (38), 12558-12559) et de l'IRMOF-16 (Y. Goto; H. Sato; S. Shinkai, K. Sada, Journal of the American Chemical Society, 2008, 130, 14354-14355). Dans le cas du solide IRMOF-16, les auteurs préparent par auto-assemblage un solide N₃-IRMOF-16 sur lequel ils font réagir divers alcynes. L'inconvénient de cette méthode est qu'elle requiert de longues étapes pour synthétiser le ligand organique porteur d'une fonction azoture. D'autre part, il n'est pas évident, à partir d'un ligand modifié d'obtenir par auto assemblage, le MOF azoture correspondant (perte de cristallinité, obtention de phases non désirées...).

La présente invention se propose de fournir un nouveau procédé de préparation d'un solide fonctionnalisé dont la mise en oeuvre permet de remédier aux difficultés rencontrées dans l'art antérieur en proposant une méthode simple basée sur une méthode de fonctionnalisation par post-modification. En particulier, le nouveau procédé de l'invention évite non seulement la mise en oeuvre d'étapes intermédiaires avec récupération des composés intermédiaires mais également la nécessité de procéder à la synthèse préalable d'un ligand fonctionnalisé.

### Description de l'invention

La présente invention a pour objet un procédé de préparation d'un solide fonctionnalisé hybride à matrice organique-inorganique, cristallisé, portant au moins un groupement réactif à base d'un cycle triazole, à partir d'un solide hybride cristallisé à matrice organique-inorganique, MOF-NH₂, contenant un réseau inorganique de centres métalliques connectés entre eux au moins par des ligands organiques comprenant au moins un cycle aromatique, au moins deux fonctions carboxylates CO₂⁻ et au moins une fonction amine -NH₂, ledit procédé comprenant au moins les étapes successives suivantes :
i/ l'introduction, dans un solvant polaire S1, dudit solide hybride cristallisé MOF-NH₂, d'au moins un composé organique Q contenant une fonction azoture N₃ et d'au moins un réactif intermédiaire R contenant une fonction nitrite NO₂ dans une proportion telle que le mélange réactionnel présente la composition molaire suivante, basée sur un équivalent molaire de la fonction -NH₂ présente dans le solide MOF-NH₂ :
   1 MOF-NH₂ : 1-150 R : 1-150 Q : 100-400 S1
ii/ la réaction dudit mélange réactionnel à une température comprise entre 0 et 100 °C pendant une durée comprise entre 1 et 24 heures,
iii/ l'introduction, dans le milieu réactionnel, d'au moins un réactif A comportant au moins une fonction terminale alcyne ou cyanure activée COCN, d'au moins un catalyseur C à base de cuivre et d'au moins un solvant polaire S2 dans une proportion telle que le mélange réactionnel présente la composition suivante, basée sur un équivalent molaire de la fonction -NH₂ présente initialement dans le solide MOF-NH₂ :
   1 MOF-NH₂ : 0.1-10 C : 1-150 R: 1-150 Q : 1-150 A: 100 - 600 (S1 + S2)
iv/ la réaction dudit mélange réactionnel à une température comprise entre 0 et 100°C pendant une durée comprise entre 1 et 48 heures,
v/ la filtration puis le lavage dudit solide fonctionnalisé hybride cristallisé,
vi/ le séchage dudit solide fonctionnalisé hybride cristallisé.

Le solide hybride cristallisé à matrice organique-inorganique préparé selon le procédé de l'invention est un solide fonctionnalisé portant au moins un groupement réactif à base d'un cycle triazole, lequel est greffé sur lesdits ligands organiques en lieu et place de la fonction - NH₂ présente dans le solide MOF-NH₂ utilisé comme réactif de départ. Le cycle triazole est un hétérocycle aromatique : le cycle est constitué de 5 atomes, dont 3 atomes d'azote adjacents et 2 atomes de carbone adjacents, et comporte deux double liaisons, l'une reliant 2 atomes d'azote et l'autre reliant les 2 atomes de carbone. De manière plus précise, le groupement réactif à base dudit cycle triazole est tel que ledit cycle est lié au ligand organique, présent dans le solide fonctionnalisé et issu d'un ligand organique présent dans le solide DMOF-NH₂, par un atome d'azote et porte une fonction R sur l'un des atomes de carbone le constituant. Ledit groupement réactif à base dudit cycle triazole présente ainsi la formule brute -N₃-CH-CR. Un atome d'azote du cycle triazole est lié au ligand organique présent dans le solide fonctionnalisé et issu d'un ligand organique présent dans le solide DMOF-NH₂. Ledit groupement réactif est représenté plus bas dans la présente description lorsqu'il se trouve lié à un ligand organique particulier, de type téréphtalate. La fonction R est choisie parmi les fonctions alcane, alcène, alcyne, amine, amide, alcool, thiol, acide carboxylique, hydroxyle, aldéhyde, cétone, phényle, benzyle, azo (-N=N-R1), diazo (-C=N⁺=N⁻), nitrile (-C=N), imide (-C(=O)-N(-R₁)-C(=O)-R₂), imine (R₁,R₂-C=N-R₃), étheroxyde (R1-O-R2), ester, halogène, isocyanate (-N=C=S), silane, nitro (-NO₂), nitroso (-NO), hétérocycle aromatique. De manière préférée, ladite fonction R est choisie parmi les fonctions benzyle, phényle, hétérocycle aromatique et amine. Pour exemple, la fonction R peut être la pyridine en tant qu'hétérocycle aromatique.

Le solide fonctionnalisé hybride à matrice organique-inorganique est un solide dé structure tridimensionnelle contenant un réseau inorganique de centres métalliques connectés par des ligands organiques, lesquels sont identiques à ceux présents dans le solide MOF-NH₂ à l'exception de la substitution de la fonction -NH₂ par le groupement réactif à base du cycle triazole -N₃-CH-CR. Lesdits centres métalliques sont par exemple à base d'atomes d'aluminium, d'indium, de fer ou de zinc. De manière préférée, lesdits ligands organiques présents dans le solide fonctionnalisé sont des ligands issus des ligands 2-aminotéréphtalate -O₂C-C₆H₃-NH₂-CO₂ (ligand NH₂-bdc) présents dans le solide MOF-NH₂ et présentent en conséquence la formule semi-développée -O₂C-C₆H₃-(N₃-CH-CR)-CO₂ (notée N₃-CH-CR-bdc) et la formule développée telle que représentée ci-dessous :

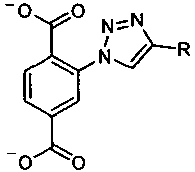

Conformément à l'invention, le solide fonctionnalisé obtenu par le procédé de l'invention présente une structure cristalline identique à celle du solide MOF-NH₂ dont il est issu.

Le solide hybride cristallisé à matrice organique-inorganique, MOF-NH₂, utilisé pour la mise en oeuvre de ladite étape i) du procédé de préparation selon l'invention est un solide de structure tridimensionnelle contenant un réseau inorganique de centres métalliques, par exemple à base d'atomes d'aluminium, d'indium, de fer ou de zinc, connectés entre eux au moins par des ligands organiques comprenant au moins un cycle aromatique, au moins deux fonctions carboxylates CO₂⁻ et au moins une fonction amine -NH₂. Les centres métalliques jouent le rôle de connecteurs. De manière préférée, lesdits ligands organiques présents dans ledit solide MOF-NH₂ sont formés par l'entité 2-aminotéréphtalate -O₂C-C₆H₃-NH₂-CO₂ (ligand NH₂-bdc). Ledit solide MOF-NH₂ peut également comprendre d'autres types de ligands organiques, différents des ligands comprenant au moins un cycle aromatique, au moins deux fonctions carboxylates CO₂⁻ et au moins une fonction amine -NH₂. Dans le cadre de la présente invention, les autres types de ligands organiques sont des ligands non réactifs ils n'entrent pas en compétition avec les ligands comprenant au moins un cycle aromatique, au moins deux fonctions carboxylates CO₂⁻ et au moins une fonction amine -NH₂, en particulier ils n'entrent pas en compétition avec les ligands NH₂-bdc, de sorte que la fonctionnalisation ne porte que sur la fonction -NH₂ présente dans les ligands comprenant au moins un cycle aromatique, au moins deux fonctions carboxylates CO₂⁻ et au moins ladite fonction amine -NH₂, de manière préférée présente dans les ligands NH₂-bdc, pour que le procédé de l'invention permette la substitution de la fonction amine par le groupement réactif -N₃-CH-CR. Par exemple, le solide MOF-NH₂ peut comprendre un premier type de ligands organiques formés par l'entité 2-aminotéréphtalate -O₂C-C₆H₃-NH₂-CO₂ (ligand NH₂-bdc) et un deuxième type de ligands organiques formé par l'entité 1,4-diazabicyclo[2.2.2]octane (DABCO).

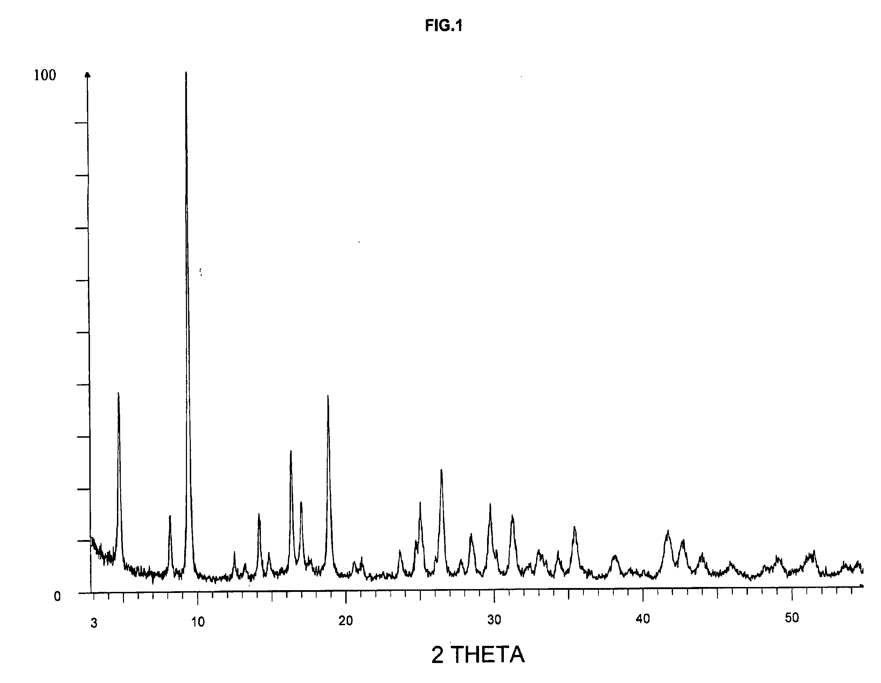

De manière préférée, ledit solide hybride cristallisé à matrice organique-inorganique, MOF-NH₂, utilisé pour la mise en oeuvre de ladite étape i) du procédé de préparation selon l'invention est choisi parmi les solides Fe(OH)(NH₂-bdc), Fe₃O(solv)₃Cl(NH₂-bdc)₃, Zn₃(NH₂-bdc)₃(H₂O)₂, Zn₂(NH₂-bdc)₂(dabco), Al(OH)(NH₂-bdc), Al₄(OH)₂(OCH₃)₄(NH₂-bdc)₃ Zn₄O(NH₂-bdc)₃ et In(OH)(NH₂-bdc). Les solides Fe(OH)(NH₂-bdc) et Fe₃O(solv)₃Cl(NH₂-bdc)₃, où solv = H₂O, DMF, sont connus dans la littérature respectivement sous les noms Fe-MIL-53-NH₂ et Fe-MIL-101-NH₂ (S. Bauer; C. Serre; T. Devic; P. Horcajada; J. Marrot; G. Ferey, N. Stock, Inorganic Chemistry, 2008, 47, 7568-7576). Leur méthode de préparation y est également décrite. Le solide Zn₃(NH₂-bdc)₃(H₂O)₂ est connu dans la littérature (X.-F. Wang; Y.-B. Zhang ; X.-N. Cheng, X.-M. Chen, CrystEngComm, 2008, 10, 753-758). Son procédé de préparation y est également décrit. Le solide Zn₂(NH₂-bdc)₂(dabco) est connu dans la littérature sous le nom DMOF-1-NH₂ (Z. Q. Wang; K. K. Tanabe, S. M. Cohen, Inorganic Chemistry, 2009, 48, 296-306). Son procédé de préparation y est également décrit. Le solide Al(OH)(NH₂-bdc) est connu dans la littérature sous le nom Al-MIL-53-NH₂ (T. Ahnfeldt; D. Gunzelmann; T. Loiseau; D. Hirsemann; J. R. Senker; G. Ferey, N. Stock, 2009, Inorganic Chemistry, 48, 7,3057-3064). Son procédé de préparation y est également décrit. Le solide Al₄(OH)₂(OCH₃)₄(NH₂-bdc)₃ est connu dans la littérature sous le nom CAU-1 (T. Ahnfeldt, N. Guillou, D. Gunzelmann, I. Margiolaki, T. Loiseau, G. Ferey, J. Senker, N. Stock, Angew. Chem. Int. Ed, 2009, vol 48, issue 28, 5163-5166). Son procédé de préparation y est également décrit. Le solide Zn₄O(NH₂-bdc)₃ est connu dans la littérature sous le nom IRMOF-3-NH₂ (M. Eddaoudi; J. Kim; N. Rosi; D. Vodak; J. Wachter; M. O'Keefe, O. M. Yaghi, Science, 2002, 295, 469-472). Son procédé de préparation y est également décrit. Le solide In(OH)(NH₂-bdc), appelé IHM-2, présente une structure cristalline isostructurale à celle des matériaux MIL-68 connus et décrits dans la littérature (T. Loiseau et al., Inorganic Chemistry. 2008, 47, 11892-11901). Le diagramme de diffraction des rayons X du solide IHM-2 est donné sur la figure 1. Un procédé de préparation dudit solide In(OH)(NH₂-bdc) est exemplifié dans la partie "exemples" de la présente demande de brevet.

Conformément à ladite étape i) dudit procédé de préparation du solide fonctionnalisé selon l'invention, ledit solide hybride cristallisé MOF-NH₂ est préalablement séché avant d'être introduit dans ledit solvant polaire S1. Le séchage dudit solide hybride cristallisé MOF-NH₂ est avantageusement réalisé à une température comprise entre 20 et 100 °C pendant une durée comprise entre 1 et 24 heures, très avantageusement pendant une durée d'environ 12 heures. Le séchage est effectué sous air ou sous vide, de manière préférée sous vide.

Conformément à ladite étape i) du procédé de préparation selon l'invention, ledit composé organique Q contenant une fonction azoture N₃ est avantageusement choisi parmi l'azoture de triméthylsilyle (TMS-N₃, (CH₃)₃SiN₃), l'azoture de triflyle (TfN₃ où Tf = CF₃SO₂), l'azoture de p-tosyle (TsN₃, ou 4-méthylbenzènesulfonylazide de formule C₆H₄(CH₃)SO₂N₃) et l'azoture de sodium (NaN₃). De manière préférée, ledit composé organique Q contenant une fonction N₃ est l'azoture de triméthylsilyle (TMS-N₃).

Conformément à ladite étape i) du procédé de préparation selon l'invention, ledit réactif intermédiaire R contenant une fonction nitrite NO₂ est avantageusement choisi parmi des réactifs alcalins comme le nitrite de sodium (NaNO₂) et le nitrite de calcium (Ca(NO₂)₂), des réactifs métalliques et des réactifs de type alcoyle tel que le tert-butyl-nitrite (tBuONO, (CH₃)₃CONO). De manière très préférée, ledit réactif intermédiaire R contenant une fonction nitrite NO₂ est le tert-butyl-nitrite (tBuONO). Ledit réactif intermédiaire R contenant une fonction nitrite NO₂ assure la formation d'un sel de diazonium qui réagit ensuite avec le composé organique Q.

Le solvant polaire S1 employé pour la mise en oeuvre de ladite étape i) du procédé de préparation selon l'invention, est préférentiellement volatil. Il est très avantageusement choisi parmi le tétrahydrofurane (THF), l'éthanol et l'acétonitrile.

Conformément à ladite étape i) du procédé de préparation selon l'invention; le mélange réactionnel présente préférentiellement la composition molaire suivante, basée sur un équivalent molaire de la fonction -NH₂ présente dans le solide MOF-NH₂ :
1 MOF-NH₂ : 4-100 R : 1-90 Q : 100-400 S1

Conformément à ladite étape ii) du procédé de préparation selon l'invention, ladite étape de réaction est préférentiellement réalisée à une température comprise entre 0 et 60°C, et de façon encore plus préférée à température ambiante. Le mélange réactionnel est agité à l'aide d'un agitateur magnétique. La durée de réaction est comprise entre 1 et 24 heures, préférentiellement entre 5 et 15 heures, le plus souvent environ 12 heures.

Conformément à ladite étape iii) du procédé de préparation selon l'invention, le réactif A, aussi appelé greffon car il permet le greffage du groupement réactif sur le solide MOF-NH₂ par une méthode de fonctionnalisation post-modification *"one pot",* comporte à la fois au moins une fonction terminale alcyne ou cyanure activée COCN et une fonction R, où R est définie comme décrit précédemment, à savoir R est choisie parmi les fonctions alcane, alcène, alcyne, amine, amide, alcool, thiol, acide carboxylique, hydroxyle, aldéhyde, cétone, phényle, benzyle, azo, diazo, nitrile, imide, imine, étheroxyde, ester, halogène, isocyanate, silane, nitro, nitroso, hétérocycle aromatique. De manière préférée, ladite fonction R est choisie parmi les fonctions benzyle, phényle, hétérocycle aromatique et amine. Pour la mise en oeuvre de ladite étape iii), on peut par exemple utiliser comme réactif A de greffage un composé choisi parmi le 1-butyne (CH₃-CH₂-CCH), le propargylamine (NH₂-CH₂-CCH), le 2-propyn-1-ol ((OH)-CH₂-CCH), le 3-butyn-2-one (CH₃-CO-CCH), le N-méthylpropargylamine (CH₃-NH-CH₂-CCH), l'acide propiolique (COOH-CCH), le méthylpropargyléther (CH₃-CH₂-O-CCH), le chlorure de propargyle (Cl-CH₂-CCH), le 2-méthyl-3-butyn-2-amine ((NH₂)(CH₃)₂-C-CCH),le 3-diméthylamino-1-propyne (N(CH₃)₂-CH₂-CCH), le méthylpropiolate (CH₃O(O)-CCH), le phénylacétylène, le 2-éthynylpyridine (C₆H₅CCH), le diéthylpropargylamine ((CH₃CH₂)₂N(CH₂CCH), le cyanure de benzoyle (C₆H₅COCN) et le pyruvonitrile (CH₃-COCN). De manière préférée, ledit réactif A est choisi parmi le phénylacétylène, le 2-éthynylpyridine (C₆H₅CCH), le diéthylpropargylamine ((CH₃CH₂)₂N-CH₂CCH) et le cyanure de benzoyle (C₆H₅COCN).

De manière très avantageuse, la fonction terminale présente dans ledit réactif A est une fonction alcyne.

Selon un mode particulier de mise en oeuvre du procédé de l'invention, ladite étape iii) est réalisée en présence de plusieurs réactifs de greffage A présentant chacun une fonction R différente les unes des autres. Par exemple, on peut introduire dans le milieu réactionnel issu de ladite étape ii), un composé comportant une fonction phényle et une fonction terminale alcyne et un composé comportant une fonction amine et une fonction terminale alcyne. Ainsi, le procédé de préparation selon l'invention permet d'obtenir un solide fonctionnalisé présentant plusieurs fonctions R différentes portées par des groupements réactifs, chacun à base d'un cycle triazole, différents.

Conformément à ladite étape iii), le catalyseur C à base de cuivre est choisi parmi les composés du cuivre présentant un degré d'oxydation du cuivre égal à 1 (Cu(I)) ou présentant un degré d'oxydation du cuivre égal à 2 (Cu(II)) en présence d'un agent réducteur. De manière préférée, ledit catalyseur C est choisi parmi les composés du cuivre présentant un degré d'oxydation du cuivre égal à 1 et plus particulièrement ledit catalyseur C à base de Cu(I) est choisi parmi l'acétate de cuivre (Cu(O)OCH₃), le bromure de cuivre (CuBr), le chlorure de cuivre (CuCl), le cyanure de cuivre (CuCN), le iodure de cuivre (Cul), l'oxyde de cuivre (Cu₂O), le sulfure de cuivre (Cu₂S) et le tétrakis(acétonitrile)hexafluorophosphate de cuivre. De manière préférée, ledit catalyseur C est le tétrakis(acétonitrile)hexafluorophosphate de cuivre (Cu^{I}(CH₃CN)₄PF₆).

Dans le cas où ladite étape iii) est réalisée en présence d'un catalyseur C à base de Cu(II), on choisit un catalyseur avantageusement choisi parmi l'acétate de cuivre (Cu((O)OCH₃)₂), l'acétinolate de cuivre (Cu(CH₃OCHOCH₃)₂, le bromure de cuivre (CuBr₂), le chlorure de cuivre (CuCl₂), le fluorure de cuivre (CuF₂) et le sulfate de cuivre (CuSO₄). De manière préférée, ledit catalyseur C à base de Cu(II) est le sulfate de cuivre (CuSO₄). Réalisée en présence d'un catalyseur C à base de Cu(II), ladite étape iii) est mise en oeuvre en présence d'un agent réducteur. L'agent réducteur utilisé est préférentiellement l'ascorbate de sodium.

Le solvant polaire S2 employé pour la mise en oeuvre de ladite étape iii) du procédé de préparation selon l'invention, est préférentiellement volatil. Il est très avantageusement choisi parmi le tétrahydrofurane (THF) et l'acétonitrile. Les solvants polaires S1 et S2 sont choisis de même composition chimique ou de composition chimique différente. De manière avantageuse, S1 et S2 présentent la même composition chimique. Toutefois, un autre cas avantageux consiste à réaliser ladite étape i) en présence d'éthanol (S1) et ladite étape iii) en présence de THF (S2).

Conformément à ladite étape iii) du procédé de préparation selon l'invention, le mélange réactionnel présente préférentiellement la composition molaire suivante, basée sur un équivalent molaire de la fonction -NH₂ présente dans le solide MOF-NH₂ de départ :
1 MOF-NH₂ : 0.1-4 C : 4-100 R : 1-90 Q : 1-100 A : 100-600 (S1 + S2)

Conformément au procédé de préparation selon l'invention, ladite étape ii) conduit à la formation *in-situ* d'un solide sous forme azoture dans lequel la fonction -NH₂ porté par chacun desdits ligands organiques présents dans le solide MOF-NH₂ est substituée par la fonction azoture N₃. Ledit solide sous forme azoture est un intermédiaire de synthèse qui n'est pas isolé. Le(s) réactif(s) A, ledit catalyseur C à base de cuivre et ledit solvant S2 sont introduits directement dans le milieu réactionnel comprenant ledit solide intermédiaire ainsi qu'un excès du composé Q et du réactif R. Le procédé de préparation selon l'invention repose sur une méthode de fonctionnalisation post-modification *"one pot*".

Conformément à ladite étape iv) du procédé de préparation selon l'invention, ladite étape de réaction est préférentiellement réalisée à une température comprise entre 0 et 60°C, et de façon encore plus préférée à température ambiante. Le mélange réactionnel est agité à l'aide d'un agitateur magnétique. La durée de réaction est comprise entre 1 et 48 heures, préférentiellement entre 1 et 24 heures, le plus souvent environ 12 heures.

Conformément à ladite étape v) du procédé de préparation selon l'invention, ledit solide fonctionnalisé hybride cristallisé obtenu à l'issue de ladite étape iv) est filtré puis lavé avec des solvants adaptés. Le lavage dudit solide fonctionnalisé hybride cristallisé est préférentiellement mis en oeuvre par une première séquence de lavages au moyen de solvants polaires, par exemple le THF, suivis d'une deuxième séquence de lavages au moyen de solvants volatils, par exemple le dichlorométhane. On procède, par exemple, à l'étape de lavage dudit solide fonctionnalisé hybride cristallisé en réalisant 3 séquences de lavage au THF suivies de 3 séquences de lavage au dichlorométhane CH₂Cl₂. Conformément à ladite étape vi) du procédé de préparation selon l'invention, ledit solide fonctionnalisé hybride cristallisé est séché. Le séchage est réalisé sous air ou sous vide entre 20°C et 100°C. De manière préférée, le séchage est réalisé à température ambiante sous vide pendant une durée variant entre 1 et 24 heures, le plus souvent environ 12 heures.

Le solide fonctionnalisé obtenu à l'issue de ladite étape vi) est analysé par diffraction des rayons X, par spectroscopie infrarouge à transformée de Fourrier (IRTF) et par résonance magnétique nucléaire de l'hydrogène (¹H RMN). Ces analyses démontrent l'efficacité du traitement de fonctionnalisation par post-modification selon l'invention. En particulier, l'analyse réalisée sur le solide fonctionnalisé hybride cristallisé par DRX démontre que le traitement de fonctionnalisation par post-modification permettant de substituer la fonction amino -NH₂ par le groupement réactif -N₃-CH-CR n'affecte pas la structure et la cristallinité du solide. L'analyse par FT-IR révèle l'absence de la fonction amino -NH₂ sur les ligands organiques, réactifs à l'égard des réactions mises en oeuvre dans les étapes ii) et iv) du procédé de l'invention et présents dans le solide fonctionnalisé. Selon les cas, lorsque la réaction mise en oeuvre à ladite étape iv) n'est pas totale, l'analyse par FTIR réalisée sur le solide fonctionnalisé issu de ladite étape vi) peut révéler la présence de la fonction azoture formée lors de la mise en oeuvre de ladite étape ii) du procédé de l'invention, ladite fonction azoture pouvant ainsi être présente sur une partie des ligands organiques présents dans le solide fonctionnalisé, lequel présente également des ligands avec le groupement réactif -N₃-CH-CR. Couplée à l'analyse par FT IR, l'analyse ¹H RMN confirme l'absence de la fonction amino -NH₂ sur chacun des ligands organiques, réactifs à l'égard des réactions mises en oeuvre dans les étapes ii) et iv) du procédé de l'invention et présents dans le solide fonctionnalisé, et permet d'estimer le taux de modification des fonctions amino -NH₂ en groupement réactif -N₃-CH-CR. Conformément au procédé de préparation selon l'invention, ce taux de modification des fonctions -NH₂ en groupement réactif -N₃-CH-CR est très élevé, c'est-à-dire au moins égal à 95 %, de préférence au moins égal à 98% voire très souvent égal à 100%. Dans le cas où la réaction mise en oeuvre à ladite étape iv) n'est pas totale, le solide fonctionnalisé comporte à la fois des fonctions azoture N₃ n'ayant pas réagi et des groupements réactifs -N₃-CH-CR. Le taux de modification des fonctions azoture N₃ en groupements réactifs -N₃-CH-CR est calculé en quantifiant la décroissance de l'aire relative des signaux des protons aromatiques du solide intermédiaire par rapport à ceux du solide fonctionnalisé. Le spectre ¹H RMN du solide fonctionnalisé présente de nouveaux signaux, liés en particulier à l'apparition d'un singulet intégrant pour un proton, lequel correspond au proton porté par le cycle triazole (N₃-CH-CR).

Conformément au procédé selon l'invention, le taux de modification des fonctions azotures N₃ en groupements réactifs -N₃-CH-CR est fonction de la mise en oeuvre (conditions opératoires et composition molaire) des étapes iii) et iv) : en particulier, pour un réactif A de greffage donné, le taux de modification des fonctions azotures N₃ en groupements réactifs-N₃-CH-CR sera d'autant plus élevé que le nombre d'équivalents molaires du réactif A et du catalyseur C introduits dans l'étape iii) sera plus élevé et/ou que la durée de réaction de ladite étape iv) sera plus longue. Lorsque la réaction mise en oeuvre à ladite étape iv) est totale (taux de modification de N₃ en N₃-CH-CR = 100%), chacun des ligands organiques présents dans le solide MOF-NH₂ et comprenant au moins un cycle aromatique, au moins deux fonctions carboxylates et au moins une fonction amine sont substitués par autant de ligands organiques comprenant au moins un cycle aromatique, au moins deux fonctions carboxylates et au moins un groupement réactif N₃-CH-CR dans le solide fonctionnalisé obtenu par le procédé de l'invention. Lorsque la réaction mise en oeuvre à ladite étape iv) n'est pas totale (taux de modification de N₃ en N₃-CH-CR < 100%), les ligands organiques présents dans le solide MOF-NH₂ et comprenant au moins un cycle aromatique, au moins deux fonctions carboxylates et au moins une fonction amine sont substitués en 2 types de ligands aux fonctions réactives différentes : des ligands organiques comprenant au moins un cycle aromatique, au moins deux fonctions carboxylates et au moins un groupement réactif N₃-CH-CR et des ligands organiques comprenant au moins un cycle aromatique, au moins deux fonctions carboxylates et au moins une fonction -N₃. Aussi, un des avantages du procédé de la présente invention réside en la possibilité de contrôler le taux de modification des fonctions azotures N₃ en groupements réactifs -N₃-CH-CR, ce qui peut être mis à profit en fonction des applications envisagées du solide fonctionnalisé. En effet, selon l'application envisagée du solide fonctionnalisé, l'Homme du métier cherchera à obtenir soit un solide fonctionnalisé dans lequel chacun des ligands porte le groupement réactif -N₃-CH-CR (taux de modification de N₃ en N₃-CH-CR = 100%) soit un solide fonctionnalisé dans lequel une partie des ligands organiques porte une fonction -N₃ et une autre partie des ligands organiques porte ledit groupement réactif -N₃-CH-CR (taux de modification de N₃ en N₃-CH-CR < 100%).

### Exemples

Les solides hybrides cristallisés MOF-NH₂ et les solides fonctionnalisés, obtenus par la mise en oeuvre des synthèses illustrées dans les exemples qui suivent, ont été analysés par diffraction des rayons X, par spectroscopie infrarouge à transformée de Fourrier (IRTF) et par résonance magnétique nucléaire de l'hydrogène (¹H RMN). Les solides intermédiaires portant la fonction azoture N₃, présents dans le milieu réactionnel à la suite de la mise en oeuvre de ladite étape ii) du procédé de préparation selon l'invention, sont également analysés par diffraction des rayons X, par spectroscopie infrarouge à transformée de Fourrier (IRTF) et par résonance magnétique nucléaire de l'hydrogène (¹H RMN).

Les diagrammes de diffraction des rayons X sont obtenus par analyse radiocristallographique en utilisant la méthode classique des poudres au moyen d'un diffractomètre Bruker D5005 (CuKα₁₊₂= 0.15418 nm) équipé d'un monochromateur arrière courbe graphite et d'un détecteur à scintillation. Les analyses des solides ont été enregistrées en mode Debye-Scherrer de 3 à 80° (2θ) avec un pas de 0,02° pendant 8 secondes.

Les analyses infra rouge sont réalisées à l'aide de pastilles KBr sur un appareil FTIR Vector 22 Bruker avec une gamme de fonctionnement utile de : 4000-400 cm⁻¹.

Les spectres de Résonance Magnétique Nucléaire en solution sont obtenus à l'aide d'un Spectromètre de RMN Bruker Avance 250 (5,87T, 250MHz pour 1H).

### Exemple 1 : Préparation de solides fonctionnalisés à partir du solide hybride cristallisé DMOF-1-NH₂.

### Exemple 1.1 : préparation du solide hybride cristallisé DMOF-1-NH₂

0,781 g de nitrate de zinc Zn(NO₃)₂.4H₂O (3,00 mmol, Merck, 98,5%) et 0,554 g d'acide 2-amino-1,4-benzène dicarboxylique NH₂-BDC (3,03mmol, Alfa Aesar, 99%) sont dissous dans 75mL de diméthylformamide (DMF, Aldrich, 99,8%). 0,542 g de 1,4-diazabicyclo[2.2.2] octane DABCO (4,815 mmol, Aldrich, 98%), est ensuite ajouté à la solution. Cet ajout se traduit par l'apparition immédiate d'un précipité blanc. Le précipité obtenu est filtré sur fritté de faible porosité tandis que le filtrat est récupéré et dilué avec 75 mL de DMF. La solution constituée du filtrat est ensuite divisée en 5 aliquotes de 30 mL qui sont réparties dans 5 autoclaves inox (capacité 43 mL) et chauffées de 35 à 120°C avec une rampe de 2,5°C/min. La température est maintenue à 120°C pendant 12 heures. Ce mode opératoire permet l'obtention de cristaux jaunâtres en forme de bâtonnets de DMOF-1-NH₂. La liqueur mère est laissée à décanter et les cristaux sont lavés trois fois avec 6 mL de DMF puis trois fois avec 6 mL de CH₂Cl₂ (Acros Organics, 99,99%). Les cristaux sont ensuite laissés en suspension dans 10 mL de CH₂Cl₂ pendant 3 jours, avec un renouvellement du solvant toutes les 24 heures. Finalement, les cristaux sont séchés sous vide à température ambiante pendant une nuit. 300 mg de DMOF-1-NH₂ sont ainsi obtenus, soit un rendement de 35% basé sur le Zn(NO₃)₂.4H₂O de départ.

Ledit solide hybride cristallisé DMOF-1-NH₂ est analysé par diffraction des rayons X, par spectroscopie infrarouge à transformée de Fourrier et par résonance magnétique nucléaire de l'hydrogène (¹H RMN).

L'analyse par diffraction des rayons X révèle que ledit solide ainsi obtenu est identifié comme étant constitué de solide DMOF-1-NH₂ : le diffractogramme effectué sur ledit solide est identique à celui présenté dans Inorganic Chemistry, 2009, 48, 300.

L'analyse par FT-IR révèle la présence de la fonction amino -NH₂ dans le solide DMOF-1-NH_{2.} IR (Pastille de KBr), υ (cm⁻¹): 3454, 3344, 2958, 1632, 1666, 1577, 1435, 1376, 1256, 1056, 833, 810, 772, 704, 661, 593. Les bandes à 3454 et 3344 cm⁻¹ sont attribuées à la fonction amine.

L'analyse ¹H RMN est réalisé sur un échantillon du solide DMOF-1-NH₂, après digestion et dissolution totale de l'échantillon dans un mélange deutéré DCI/D₂O/DMSO-*d*₆ selon le mode opératoire décrit dans la littérature (Z. Q. Wang, S. M. Cohen, Journal of the American Society, 2007, 129, 12368-12369) : 10 mg de solide hybride DMOF-1-NH₂ sont digérés et dissous dans 1,5 mL de DMSO deutéré et 0,2 mL d'une solution diluée de DCI (préparée à partir d'une solution contenant 0,23mL de DCI/D₂O à 35% et 1mL de DMSO deutéré). L'analyse ¹H NMR révèle également la présence du groupement amino - NH₂ dans le solide DMOF-1-NH₂. ¹H RMN, 250 Hz, t.a, δ (ppm / (DCI/D₂O/DMSO-*d₆*)) : 7,02 (d, 1H, J = 8,3Hz); 7,38 (s, 1H); 7,74 (d, 1H, J = 8,3Hz), 3,52 (s, 6H, DABCO).

L'analyse ¹H RMN permet également de confirmer la présence des ligands NH₂-bdc et DABCO dans une proportion telle que le rapport molaire NH₂-bdc /DABCO = 2.

### Exemple 1.2 : préparation d'un solide fonctionnalisé portant une fonction phényle sur le cycle triazole, en utilisant le phénylacétylène comme réactif à fonction alcyne terminale.

80 mg (0,27 mmol équivalent -NH₂) de solide DMOF-1-NH₂ obtenu à l'issue du procédé illustré dans l'exemple 1.1, sont séchés pendant 12 heures à 85°C sous vide puis sont placés dans un pilulier (capacité 8 mL) avec 3 mL (37 mmol, 137 éq) de THF, 0,217 mL (1,84 mmol, 7 eq) de tBuONO (Aldrich) et 0,199 mL (1,508 mmol, 6 eq) de TMS-N₃ (Aldrich). Après une nuit de réaction à température ambiante et sous agitation, 0.96 mL de phénylacétylène (8.8mmol, 32 eq, Aldrich, 98%) et 48 mg de Cu^{I}(CH₃CN)₄PF₆ (0.26mmol, 1 eq, Aldrich) en solution dans 1 mL de THF (12.3 mmol, 46 eq) sont additionnés et le mélange est maintenu sous agitation pendant 12 h supplémentaires à température ambiante. Après filtration, le solide est lavé 3 fois au THF (x 8 ml) puis 3 fois avec CH₂Cl₂ (x 8 ml). Le solide est finalement séché sous vide à température ambiante pendant une nuit.

Le solide obtenu a été analysé par diffraction des rayons X. Le diffractogramme effectué sur le solide DMOF-1-fonctionnalisé montre que ledit solide présente une structure cristalline identique à celle du solide DMOF-1-NH₂. L'analyse réalisée sur le solide hybride cristallisé DMOF-1-fonctionnalisé par DRX démontre que le traitement de post-modification permettant de substituer la fonction amino - NH₂ par le groupement réactif -N₃CHCC₆H₅ n'affecte pas la structure et la cristallinité du solide.

Afin d'obtenir une quantification du taux de modification du DMOF1-NH₂ en DMOF-1-fonctionnalisé et du DMOF-1-N₃ (solide intermédiaire non isolé) en DMOF-1-fonctionnalisé, ces solides sont analysés par ¹H-RMN. L'analyse ¹H RMN est réalisée sur un échantillon du solide hybride DMOF-1-fonctionnalisé, après digestion et dissolution totale de l'échantillon dans un mélange deutéré DCI/D₂O/DMSO-*d*₆ selon un mode opératoire décrit dans la littérature (Z. Q. Wang, S. M. Cohen, Journal of the American Chemical Society, 2007, 129, 12368-12369) : 10 mg de solide hybride DMOF-1-fonctionnalisé sont digérés et dissous dans 1,5 mL de DMSO deutéré et 0,2 mL d'une solution diluée de DCI (préparée à partir d'une solution contenant 0,23mL de DCl/D₂O à 35% et 1mL de DMSO deutéré).

L'analyse ¹H RMN confirme la présence du groupement réactionnel -N₃CHCC₆H₅ sur le cycle aromatique du ligand téréphtalate. ¹H RMN 250 MHz, t.a, δ (ppm / (DCl/D₂O/DMSO-d₆)) : δ = 9.14 (s, 1 H), 8.19 (m, 2H), 8.05 (d, 1H, J= 8Hz,), 7.93 (d, 2H, J= 7Hz), 7.45 (m, 3H), 3.52 (s, 6H, DABCO). La détection d'un singulet à 9.14 ppm correspond au proton porté par le cycle triazole -N₃CHCC₆H₅-.

L'analyse ¹H RMN permet également de confirmer la présence des ligands N₃CHCR-bdc et DABCO dans la même proportion telle que le rapport molaire N₃CHCR-bdc/DABCO = 2.

L'analyse par FT-IR révèle que les bandes à 3454 et 3344 cm⁻¹ correspondant à la fonction-NH₂ ont entièrement disparu.

La comparaison des spectres IR et ¹H RMN obtenus pour les solides DMOF-1-NH₂, DMOF-1-N₃ et DMOF-1-fonctionnalisé (DMOF-1-N₃-CH-CC₆H₅) démontre l'efficacité dudit traitement de fonctionnalisation par post-modification, la comparaison des spectres ¹H RMN obtenus pour le solide DMOF-1-NH₂ et pour le solide DMOF-1-fonctionnalisé permettant de déterminer à 100% le taux de modification des fonctions amino -NH₂ en groupements réactifs -N₃CHCC₆H₅ en quantifiant la décroissance de l'aire relative des signaux du solide DMOF1-NH₂ par rapport à ceux du solide DMOF-1-N₃-CH-CC₆H₅. La comparaison des spectres ¹H RMN obtenus pour le solide DMOF-1-N₃ et pour le solide DMOF-1-fonctionnalisé (DMOF-1-N₃-CH-CC₆H₅) permet de déterminer également à 100% le taux de modification des fonctions azotures N₃ en groupements réactifs -N₃CHCC₆H₅ en quantifiant la décroissance de l'aire relative des signaux du solide DMOF-1-N₃ par rapport à ceux du solide fonctionnalisé DMOF-1-N₃-CH-CC₆H₅.

En outre, les essais de spectrométrie de masse en mode positif réalisés sur le solide fonctionnalisé DMOF-1-N₃-CH-CC₆H₅ indiquent un pic à m/z 310 et qui correspond au ligand fonctionnalisé acide (2-(-4-phenyl-1,2,3-triazol-1-yl) téréphtalique.

### Exemple 1.3 : préparation d'un solide fonctionnalisé portant une fonction amine tertiaire sur le cycle triazole, en utilisant le diéthypropargylamine comme réactif à fonction alcyne terminale.

Cet exemple est réalisé dans les mêmes conditions opératoires que l'exemple 1.2. On utilise le diéthylpropargylamine (CH₃CH₂)₂-N-CH₂-CCH à la place du phénylacétylène. Les quantités introduites de chacun des réactifs sont les suivantes :
Etape i) : DMOF-1-NH₂ : 80 mg (0,27 mmol équivalent -NH₂) ; THF : 3 mL (37 mmol, 137 eq); tBuONO : 0,217 mL (1,84 mmol, 7 eq) ; TMS-N3:0,199 mL (1,508 mmol, 6 eq).
Etape iii) : diéthylpropargylamine : 0.33 mL (2.3 mmol, 8.5 eq) ; Cu^{I}(CH₃CN)₄PF₆ : 21 mg (0.11 mmol, 0.4 eq) ; THF : 1 ml (12.3 mmol, 46 eq)

Le solide DMOF-1-fonctionnalisé obtenu a été analysé par diffraction des rayons X. Le diffractogramme effectué sur le solide DMOF-1-fonctionnalisé montre que ledit solide présente une structure cristalline identique à celle du solide DMOF-1-NH₂. L'analyse réalisée sur le solide hybride cristallisé DMOF-1-fonctionnalisé par DRX démontre que le traitement de fonctionnalisation par post-modification permettant de substituer la fonction amino - NH₂ par le groupement réactif -N₃CH-C-CH₂-N-(CH₂-CH₃)₂ n'affecte pas la structure et la cristallinité du solide.

Le solide fonctionnalisé DMOF-1-N₃CH-C-CH₂-N-(CH₂-CH₃)₂ est également analysé par IRTF et ¹H RMN d'une manière analogue à celle décrite dans l'exemple 1.2. La comparaison des spectres IRTF et ¹H RMN obtenus pour les solides DMOF-1-NH₂ et DMOF-1-N₃CH-C-CH₂-N-(CH₂-CH₃)₂ permet d'estimer à 100% le taux de modification des fonctions amino-NH₂ en groupements réactifs -N₃CH-C-CH₂-N-(CH₂-CH₃)₂. Le taux de modification des fonctions azotures N₃ en groupements réactifs est donné dans le tableau 1.

### Exemple 1.4 : préparation d'un solide fonctionnalisé portant une fonction constituée par un hétérocycle C₅H₄N sur le cycle triazole en utilisant le réactif 2-éthynylpyridine comme réactif à fonction alcyne terminale.

Cet exemple est réalisé dans les mêmes conditions opératoires que l'exemple 1.2. On utilise le 2-éthynylpyridine (C₅H₄N)CCH à la place du phénylacétylène.

Les quantités introduites de chacun des réactifs sont les suivantes :
Etape i) : DMOF-1-NH2 : 80 mg (0,27 mmol équivalent -NH₂) ; THF : 3 mL (37 mmol, 137 eq) ; tBuONO : 0,217 mL (1,84 mmol, 7 eq) ; TMS-N_{3:} 0,199 mL (1,508 mmol, 6 eq).
Etape iii) : 2-éthynylpyridine : 2 ml (19.8 mmol, 73 eq) ; Cu^{I}(CH₃CN)₄PF₆ : 109 mg (0.59 mmol, 2.2 eq) ; THF : 1 ml (12.3 mmol, 46 eq).

Le solide DMOF-1-fonctionnalisé obtenu a été analysé par diffraction des rayons X. Le diffractogramme effectué sur le solide DMOF-1-fonctionnalisé montre que ledit solide présente une structure cristalline identique à celle du solide DMOF-1-NH₂. L'analyse réalisée sur le solide hybride cristallisé DMOF-1-fonctionnalisé par DRX démontre que le traitement de fonctionnalisation par post-modification permettant de substituer la fonction amino - NH₂ par le groupement réactif -N₃CH-C-C₅H₄N n'affecte pas la structure et la cristallinité du solide.

Le solide fonctionnalisé DMOF-1-N₃CH-C-C₅H₄N est également analysé par IRTF et ¹H RMN d'une manière analogue à celle décrite dans l'exemple 1.2. La comparaison des spectres IRTF et ¹H RMN obtenus pour les solides DMOF-1-NH₂ et DMOF-1-N₃CH-C-C₅H₄N permet d'estimer à 100% le taux de modification des fonctions amino -NH₂ en groupements réactifs -N₃CH-C-C₅H₄N. Le taux de modification des fonctions azotures N₃ en groupements réactifs-N₃CH-C-C₅H₄N est donné dans le tableau 1.

### Exemple 2 : Préparation de solides fonctionnalisés à partir du solide hybride cristallisé MIL-53-Al-NH₂

### Exemple 2.1 : préparation du solide hybride cristallisé MIL-53-Al-NH₂

120 mg (0,66 mmol) d'acide 2-amino-1,4-benzène dicarboxylique (Alfa Aesar, 99%) en suspension dans 28 mL (1,55 mmol) d'eau distillée sont placés dans un récipient en PTFE de 40 mL de volume intérieur, 1.10 mL (0,44 mmol) d'une solution de chlorure d'aluminium hydraté (AlCl₃.6H₂O, Aldrich, 98%) de concentration 0.4 mol/L et 0.56 mL (0,22 mmol) d'une solution de NaOH de concentration 0.4 mol/L y sont ajoutés. Le mélange est agité pendant 5 minutes à l'aide d'un agitateur magnétique. Le récipient en PTFE est alors transvasé dans un autoclave puis chauffé sans agitation à 110°C pendant 24 h. Après refroidissement, le solide cristallisé obtenu est lavé à l'eau, puis avec une solution à chaud de DMF (Aldrich, 99.8%) et au dichlorométhane (ACROS ORGANICS, 99.99%). Après séchage à l'étuve (air) à 80°C pendant une nuit, on obtient une poudre constituée de cristaux de MIL-53-Al-NH₂.

Ledit solide hybride cristallisé MIL-53-Al-NH₂ est analysé par diffraction des rayons X, par spectroscopie infrarouge à transformée de Fourrier et par résonance magnétique nucléaire de l'hydrogène (¹H RMN).

L'analyse par diffraction des rayons X révèle que ledit solide ainsi obtenu est identifié comme étant constitué de solide MIL-53-Al-NH₂: le diffractogramme effectué sur ledit solide est identique à celui correspondant au solide MIL-53-Al-NH₂ (It) présenté dans Inorganic Chemistry, 2009, 48, 7,3057-3064.

L'analyse par FT-IR révèle la présence de la fonction amino -NH₂ dans le solide MIL-53-Al-NH₂.

IR (Pastille de KBr), υ (cm⁻¹): 3498, 3386, 2951, 1685, 1581, 1487, 1436, 1402, 1333, 1256, 1000, 777, 640, 597, 546, 452. Les bandes à 3498 et 3386 cm⁻¹ sont attribuées à la fonction amine.

L'analyse ¹H RMN est réalisée sur un échantillon du solide MIL-53-Al-NH₂, après digestion et dissolution totale de l'échantillon dans un mélange deutéré DCI/D₂O/DMSO-*d*₆ selon le mode opératoire décrit dans la littérature (Z. Q. Wang, S. M. Cohen, Journal of the American Society, 2007, 129, 12368-12369) : 10 mg de solide hybride MIL-53-Al-NH₂ sont digérés et dissous dans 1,5 mL de DMSO deutéré et 0,2 mL d'une solution diluée de DCI (préparée à partir d'une solution contenant 0,23mL de DCl/D₂O à 35% et 1mL de DMSO deutéré). Couplée à l'analyse par FT IR, l'analyse ¹H RMN révèle également la présence du groupement amino - NH₂ dans le solide MIL-53-Al-NH₂. ¹H RMN, 250 MHz, t.a, δ (ppm / (DCI/D₂O/DMSO-*d₆*)) : 6.90 (d, 1H, J = 8 Hz); 7,03 (s, 1 H); 7,56 (d, 1H, J = 8 Hz).

### Exemple 2.2 : préparation d'un solide fonctionnalisé portant une fonction phényle sur le cycle triazole, en utilisant le phénylacétylène comme réactif à fonction alcyne terminale.

80 mg (0,36 mmol équivalent -NH₂) de solide MIL-53-Al-1-NH₂ obtenu à l'issue du procédé illustré dans l'exemple 2.1, sont séchés pendant 12 heures à 85°C sous vide puis sont placés dans un pilulier (capacité 8 mL) avec 3 mL (51.3 mmol, 142.5 eq) d'éthanol, 3.8 ml (32 mmol, 89 eq) de tBuONO (Aldrich) et 3.6 mL (28 mmol, 78 eq) de TMS-N₃ (Aldrich).

Après une nuit de réaction à température ambiante et sous agitation, 0.78 mL de phénylacétylène (7.2 mmol, 20 eq, Aldrich, 98%) et 51 mg de Cu^{I}(CH₃CN)₄PF₆ (0.28mmol, 0.8 eq, Aldrich) en solution dans 1 mL de THF (17.1 mmol, 47.5 eq) sont additionnés et le mélange est maintenu sous agitation pendant 12 h supplémentaires à température ambiante. Après filtration, le solide est lavé 3 fois au THF (x 8 ml) puis 3 fois avec CH₂Cl₂ (x 8 ml). Le solide est finalement séché sous vide à température ambiante pendant une nuit.

Le solide MIL-53-Al-fonctionnalisé obtenu a été analysé par diffraction des rayons X. Le diffractogramme effectué sur le solide MIL-53-Al-fonctionnalisé montre que ledit solide présente une structure cristalline identique à celle du solide MIL-53-Al-NH₂. L'analyse réalisée sur le solide hybride cristallisé MIL-53-Al-fonctionnalisé par DRX démontre que le traitement de fonctionnalisation par post-modification permettant de substituer la fonction amino - NH₂ par le groupement réactif -N₃CH-C-C₆H₅ n'affecte pas la structure et la cristallinité du solide.

Le solide fonctionnalisé MIL-53-Al-N₃-CH-C-C₆H₅ est également analysé par IRTF et ¹H RMN d'une manière analogue à celle décrite dans l'exemple 1.2. La comparaison des spectres IRTF et ¹H RMN obtenus pour les solides MIL-53-Al-NH₂ et MIL-53-Al-N₃-CH-C-C₆H₅ permet d'estimer à 100% le taux de modification des fonctions amino -NH₂ en groupements réactifs -N₃CH-C-C₆H₅. Le taux de modification des fonctions azotures N₃ en groupements réactifs est donné dans le tableau 1.

### Exemple 2.3 : préparation d'un solide fonctionnalisé portant une fonction constituée par un hétérocycle C₅H₄N sur le cycle triazole, en utilisant le réactif 2-éthynylpyridine comme réactif à fonction alcyne terminale.

Cet exemple est réalisé dans les mêmes conditions opératoires que l'exemple 2.2. On utilise le 2-éthynylpyridine (C₅H₄N)CCH à la place du phénylacétylène.

Les quantités introduites de chacun des réactifs sont les suivantes :
Etape i) : MIL-53-Al-NH₂ : 80 mg (0,36 mmol équivalent -NH₂) ; éthanol : 3 mL (51.3 mmol, 142.5 eq) ; tBuONO : 3.8 mL (32 mmol, 89 eq) ; TMS-N₃: 3.6 mL (28 mmol, 78 eq)
Etape iii) : 2-éthynylpyridine : 1.28 ml (12.6 mmol, 35 eq) ; Cu^{l}(CH₃CN)₄PF₆ : 48 mg (0.26 mmol, 0.7 eq) ; THF : 1 ml (17.1 mmol, 47.5 eq).

Le solide MIL-53-Al-fonctionnalisé obtenu a été analysé par diffraction des rayons X. Le diffractogramme effectué sur le solide MIL-53-Al-fonctionnalisé montre que ledit solide présente une structure cristalline identique à celle du solide MIL-53-Al-NH₂. L'analyse réalisée sur le solide hybride cristallisé MIL-53-Al-fonctionnalisé par DRX démontre que le traitement de fonctionnalisation par post-modification permettant de substituer la fonction amino - NH₂ par le groupement réactif -N₃CH-C-C₅H₄N n'affecte pas la structure et la cristallinité du solide.

Le solide fonctionnalisé MIL-53-Al-N₃CH-C-C₅H₄N est également analysé par IRTF et ¹H RMN d'une manière analogue à celle décrite dans l'exemple 1.2. La comparaison des spectres IRTF et ¹H RMN obtenus pour les solides MIL-53-Al-NH₂ et MIL-53-Al-N₃CH-C-C₅H₄N permet d'estimer à 100% le taux de modification des fonctions amino -NH₂ en groupements réactifs -N₃CH-C-C₅H₄N. Le taux de modification des fonctions azotures N₃ en groupements réactifs -N₃CH-C-C₅H₄N est donné dans le tableau 1.

### Exemple 3 : Préparation de solides fonctionnalisés à partir du solide hybride cristallisé CAU-1.

### Exemple 3.1 : préparation du solide hybride cristallisé CAU-1.

365,3 mg de chlorure d'aluminium hydraté (AlCl₃.6H₂O, 1.5 mmol, Aldrich, 98%) sont placés dans un récipient en PTFE de 40 mL de volume intérieur, 94 mg d'acide 2-aminotéréphthalique (NH₂-H₂-bdc, 0,5 mmol, Alfa Aesar, 99%) et 10 mL de méthanol (ACROS ORGANICS, 99.99%) y sont ajoutés. Le mélange est agité pendant 5 minutes à l'aide d'un agitateur magnétique. Le récipient en PTFE est alors transvasé dans un autoclave puis chauffé sans agitation à 125°C pendant 5 jours. Après refroidissement et filtration, le solide cristallisé obtenu est lavé au méthanol (Acros Organics, 99,99%), puis avec une solution à chaud (24 heures, 160°C) de DMF (Aldrich, 99,8%) et est imprégné (48 heures) dans le dichlorométhane (ACROS ORGANICS, 99,99%). Après séchage en étuve (air) à une température égale à 120°C pendant une durée de 12 heures, on obtient un matériau sous forme de poudre constituée de cristaux de CAU-1.

Ledit solide hybride cristallisé CAU-1 est analysé par diffraction des rayons X, par spectroscopie infrarouge à transformée de Fourrier et par résonance magnétique nucléaire de l'hydrogène (¹H RMN).

L'analyse par diffraction des rayons X révèle que ledit solide ainsi obtenu est identifié comme étant constitué de solide CAU-1: le diffractogramme effectué sur ledit solide est identique à celui présenté dans Angew. Chem. Int. Ed, 2009, vol 48, issue 28, 5163-5166.

L'analyse par FT-IR révèle la présence de la fonction amino -NH₂ dans le solide CAU-1.

IR (Pastille de KBr), υ (cm⁻¹): 3454, 3386, 2935, 1669, 1574, 1432, 1393, 1260, 1066, 788, 607, 547. Les bandes à 3454 et 3386 cm⁻¹ sont attribuées à la fonction amine.

L'analyse ¹H RMN est réalisée sur un échantillon du solide CAU-1, après digestion et dissolution totale de l'échantillon dans un mélange deutéré DCl/D₂O/DMSO-d₆ selon le mode opératoire décrit dans la littérature (Z. Q. Wang, S. M. Cohen, Journal of the American Society, 2007, 129, 12368-12369) : 10 mg de solide hybride CAU-1 sont digérés et dissous dans 1,5 mL de DMSO deutéré et 0,2 mL d'une solution diluée de DCI (préparée à partir d'une solution contenant 0,23mL de DCl/D₂O à 35% et 1mL de DMSO deutéré).

Couplée à l'analyse par FT IR, l'analyse ¹H RMN révèle également la présence du groupement amino - NH₂ dans le solide CAU-1 ¹H RMN, 250 MHz, t.a, δ (ppm / (DCl/D₂O/DMSO-*d*₆)) : 6,88 (d, 1H, J = 8 Hz); 7,03 (s, 1H); 7,6 (d, 1H, J = 8 Hz).

### Exemple 3.2 : préparation d'un solide fonctionnalisé portant une fonction phényle sur le cycle triazole, en utilisant le phénylacétylène comme réactif à fonction alcyne terminale.

80 mg (0,30 mmol équivalent -NH₂) de solide CAU-1 obtenu à l'issue du procédé illustré dans l'exemple 3.1, sont séchés pendant 12 heures à 85°C sous vide puis sont placés dans un pilulier (capacité 8 mL) avec 3 mL (37 mmol, 123 eq) de THF, 0,74 mL (6.32 mmol, 21 eq) de tBuONO (Aldrich) et 0,65 mL (5 mmol, 17 eq) de TMS-N₃ (Aldrich).

Après une nuit de réaction à température ambiante et sous agitation, 1.1 mL de phénylacétylène (10.1 mmol, 34 eq, Aldrich, 98%) et 54 mg de Cu^{l}(CH₃CN)₄PF₆ (0.29mmol, 1 eq, Aldrich) en solution dans 1 mL de THF (12.3 mmol, 41 eq) sont additionnés et le mélange est maintenu sous agitation pendant 12 h supplémentaires à température ambiante. Après filtration, le solide est lavé 3 fois au THF (x 8 ml) puis 3 fois avec CH₂CI₂ (x 8 ml). Le solide est finalement séché sous vide à température ambiante pendant une nuit.

Le solide CAU-1-fonctionnalisé obtenu a été analysé par diffraction des rayons X. Le diffractogramme effectué sur le solide CAU-1-fonctionnalisé montre que ledit solide présente une structure cristalline identique à celle du solide CAU-1. L'analyse réalisée sur le solide hybride cristallisé CAU-1-fonctionnalisé par DRX démontre que le traitement de fonctionnalisation par post-modification permettant de substituer la fonction amino - NH₂ par le groupement réactif -N₃CH-C-C₆H₅ n'affecte pas la structure et la cristallinité du solide.

Le solide fonctionnalisé CAU-1-CH-C-C₆H₅ est également analysé par IRTF et ¹H RMN d'une manière analogue à celle décrite dans l'exemple 1.2. La comparaison des spectres IRTF et ¹H RMN obtenus pour les solides CAU-1 et CAU-1-N₃-CH-C-C₆H₅ permet d'estimer à 100% le taux de modification des fonctions amino -NH₂ en groupements réactifs -N₃CH-C-C₆H₅. Le taux de modification des fonctions azotures N₃ en groupements réactifs est donné dans le tableau 1.

### Exemple 3.3 : préparation d'un solide fonctionnalisé portant une fonction amine tertiaire sur le cycle triazole, en utilisant le diéthylpropargylamine comme réactif à fonction alcyne terminale.

Cet exemple est réalisé dans les mêmes conditions opératoires que l'exemple 3.2. On utilise le diéthylpropargylamine (CH₃CH₂)₂-N-CH₂-CCH à la place du phénylacétylène. Les quantités introduites de chacun des réactifs sont les suivantes :
Etape i) : CAU-1-NH2 : 80 mg (0,30 mmol équivalent -NH₂) ; THF : 3 mL (37 mmol, 123 eq) ; tBuONO : 0,74 mL (6.32 mmol, 21 eq) ; TMS-N_{3:}0,65 mL (5 mmol, 17 eq).
Etape iii) : diéthylpropargylamine 1.38 mL (9.6 mmol, 32 eq) ; Cu^{l}(CH₃CN)₄PF₆ : 54 mg (0.29 mmol, 1 eq) ; THF : 1 ml (12.3 mmol, 41 eq).

Le solide CAU-1-fondionnalisé obtenu a été analysé par diffraction des rayons X. Le diffractogramme effectué sur le solide CAU-1-fonctionnalisé montre que ledit solide présente une structure cristalline identique à celle du solide CAU-1. L'analyse réalisée sur le solide hybride cristallisé CAU-1-fonctionnalisé par DRX démontre que le traitement de fonctionnalisation par post-modification permettant de substituer la fonction amino - NH₂ par le groupement réactif -N₃CH-C-CH₂-N-(CH₂-CH₃)₂ n'affecte pas la structure et la cristallinité du solide.

Le solide fonctionnalisé CAU-1-N₃CH-C-CH₂-N-(CH₂-CH₃)₂ est également analysé par IRTF et ¹H RMN d'une manière analogue à celle décrite dans l'exemple 1.2. La comparaison des spectres IRTF et ¹H RMN obtenus pour les solides CAU-1 et CAU-1-N₃CH-C-CH₂-N-(CH₂-CH₃)₂ permet d'estimer à 100% le taux de modification des fonctions amino -NH₂ en groupements réactifs -N₃CH-C-CH₂-N-(CH₂-CH₃)₂. Le taux de modification des fonctions azotures N₃ en groupements réactifs est donné dans le tableau 1.

### Exemple 3.4 : préparation d'un solide fonctionnalisé portant une fonction constituée par un hétérocycle C₅H₄N sur le cycle triazole, en utilisant le réactif 2-éthynylpyridine comme réactif à fonction alcyne terminale.

Cet exemple est réalisé dans les mêmes conditions opératoires que l'exemple 3.2. On utilise le 2-éthynylpyridine (C₅H₄N)CCH à la place du phénylacétylène.

Les quantités introduites de chacun des réactifs sont les suivantes :
Etape i) : CAU-1 -NH₂: 80 mg (0,30 mmol équivalent -NH₂) ; THF : 3 mL (37 mmol, 123 eq) ; tBuONO : 0,74 mL (6.32 mmol, 21 eq) ; TMS-N_{3:} 0,65 mL (5 mmol, 17 eq).
Etape iii) : 2-éthynylpyridine : 0.96 ml (9.45 mmol, 31.5 eq) ; Cu^{l}(CH₃CN)₄PF₆ : 48 mg (0.26 mmol, 0.9 eq) ; THF : 1 ml (12.3 mmol, 41 eq).

Le solide obtenu a été analysé par diffraction des rayons X. Le diffractogramme effectué sur le solide CAU-1-fonctionnalisé montre que ledit solide présente une structure cristalline identique à celle du solide CAU-1. L'analyse réalisée sur le solide hybride cristallisé CAU-1-fonctionnalisé par DRX démontre que le traitement de fonctionnalisation par post-modification permettant de substituer la fonction amino -NH₂ par le groupement réactif-N₃CH-C-C₅H₄N n'affecte pas la structure et la cristallinité du solide.

Le solide fonctionnalisé CAU-1-N₃CH-C-C₅H₄N est également analysé par IRTF et ¹H RMN d'une manière analogue à celle décrite dans l'exemple 1.2. La comparaison des spectres IRTF et ¹H RMN obtenus pour les solides CAU-1-NH₂ et CAU-1-N₃CH-C-C₅H₄N permet d'estimer à 100% le taux de modification des fonctions amino -NH₂ en groupements réactifs -N₃CH-C-C₅H₄N. Le taux de modification des fonctions azotures N₃ en groupements réactifs-N₃CH-C-C₅H₄N est donné dans le tableau 1.

### Exemple 4 : préparation de solides fonctionnalisés à partir du solide hybride cristallisé IHM-2

### Exemple 4.1 : préparation du solide hybride cristallisé IHM-2

4.82 mL (3,3 mmol) d'une solution de nitrate d'indium (Alfa Aesar, 99,99%) dans le diméthylformamide (DMF, Aldrich, 99,8%) de concentration 0.68 mol/L sont placés dans un récipient en pyrex de 100 mL de volume intérieur, 10.06 mL (3,3 mmol) d'une solution d'acide 2-amino-1,4-benzène dicarboxylique (Alfa Aesar, 99%) dans du DMF de concentration 0,33 mol/L sont ajoutés. Le mélange est agité pendant 5 minutes à l'aide d'un agitateur magnétique. Après homogénéisation, 4.83 mL (6,7 mmol) d'une solution de 1,4-diazabicyclo[2.2.2] octane (DABCO, Aldrich, 98%) dans le DMF de concentration 1,38 mol/L sont ajoutés. La solution est agitée pendant 120 minutes à température ambiante. Après refroidissement et filtration, le solide cristallisé obtenu est lavé (24 heures) avec une solution à chaud (160°C) de DMF puis est imprégné avec du dichlorométhane (48 heures). Après séchage à l'air à une température égale à 120°C pendant une durée de 12 heures, on obtient un matériau sous forme de poudre constituée de cristaux de IHM-2.

Ledit solide hybride cristallisé IHM-2 est analysé par diffraction des rayons X, par spectroscopie infrarouge à transformée de Fourrier et par résonance magnétique nucléaire de l'hydrogène (¹H RMN).

L'analyse par diffraction des rayons X révèle que ledit solide ainsi obtenu est identifié comme étant constitué de solide IHM-2 : le diffractogramme effectué sur le solide IHM-2 est celui donné par la figure 1.

L'analyse par FT-IR révèle la présence de la fonction amino -NH₂ dans le solide IHM-2 IR (Pastille de KBr), υ (cm⁻¹): 3450, 3379, 2975, 1660, 1623, 1556, 1423, 1381, 1256, 1044, 829, 790, 770, 699, 579, 522. Les bandes à 3450 et 3379 cm⁻¹ sont attribuées à la fonction amine.

L'analyse ¹H RMN est réalisée sur un échantillon du solide IHM-2, après digestion et dissolution totale de l'échantillon dans un mélange deutéré DCl/D₂O/DMSO-*d*₆ selon le mode opératoire décrit dans la littérature (Z. Q. Wang, S. M. Cohen, Journal of the American Society, 2007, 129, 12368-12369) : 10 mg de solide hybride IHM-2 sont digérés et dissous dans 1,5 mL de DMSO deutéré et 0,2 mL d'une solution diluée de DCI (préparée à partir d'une solution contenant 0,23mL de DCl/D₂O à 35% et 1mL de DMSO deutéré).

L'analyse ¹H NMR révèle également la présence du groupement amino - NH₂ dans le solide IHM-2 ¹H RMN, 250 MHz, t.a, δ (ppm / (DCl/D₂O/DMSO-d₆)) : 7,15 (d, 1H, J = 8,3Hz); 7,44 (s, 1H); 7,80 (d, 1H, J = 8,3Hz).

### Exemple 4.2 : préparation d'un solide fonctionnalisé portant une fonction phényle sur le cycle triazole, en utilisant le phénylacétylène comme réactif à fonction alcyne terminale.

80 mg (0,26 mmol équivalent -NH₂) de solide IHM-2 obtenu à l'issue du procédé illustré dans l'exemple 4.1, sont séchés pendant 12 heures à 85°C sous vide puis sont placés dans un pilulier (capacité 8 mL) avec 3 mL (37 mmol, 142,3 eq) de THF, 1.48 mL (12.48 mmol, 48 eq) de tBuONO (Aldrich) et 1.3 mL (9.88 mmol, 38 eq) de TMS-N₃ (Aldrich).

Après une nuit de réaction à température ambiante et sous agitation, 0.96 mL de phénylacétylène (8.8 mmol, 33.8 eq, Aldrich, 98%) et 48 mg de Cu^{l}(CH₃CN)₄PF₆ (0.26 mmol, 1 eq, Aldrich) en solution dans 1 mL de THF (12.3 mmol, 47 eq) sont additionnés et le mélange est maintenu sous agitation pendant 12 h supplémentaires à température ambiante. Après filtration, le solide est lavé 3 fois au THF (x 8 ml) puis 3 fois avec CH₂Cl₂ (x 8 ml). Le solide est finalement séché sous vide à température ambiante pendant une nuit.

Le solide IHM-2-fonctionnalisé obtenu a été analysé par diffraction des rayons X. Le diffractogramme effectué sur le solide IHM-2-fonctionnalisé montre que ledit solide présente une structure cristalline identique à celle du solide IHM-2. L'analyse réalisée sur le solide hybride cristallisé IHM-2-fonctionnalisé par DRX démontre que le traitement de fonctionnalisation par post-modification permettant de substituer la fonction amino -NH₂ par le groupement réactif -N₃CH-C-C₆H₅ n'affecte pas la structure et la cristallinité du solide.

Le solide fonctionnalisé IHM-2-N₃-CH-C-C₆H₅ est également analysé par IRTF et ¹H RMN d'une manière analogue à celle décrite dans l'exemple 1.2. La comparaison des spectres IRTF et ¹H RMN obtenus pour les solides IHM-2 et IHM-2-N₃-CH-C-C₆H₅ permet d'estimer à 100% le taux de modification des fonctions amino -NH₂ en groupements réactifs -N₃CH-C-C₆H₅. Le taux de modification des fonctions azotures N₃ en groupements réactifs est donné dans le tableau 1.

### Exemple 4.3 : préparation d'un solide fonctionnalisé portant une fonction amine tertiaire sur le cycle triazole, en utilisant le diéthylpropargylamine comme réactif à fonction alcyne terminale.

Cet exemple est réalisé dans les mêmes conditions opératoires que l'exemple 4.2. On utilise le diéthylpropargylamine (CH₃CH₂)₂-N-CH₂-CCH à la place du phénylacétylène. Les quantités introduites de chacun des réactifs sont les suivantes :
Etape i) : IHM-2 : 80 mg (0,26 mmol équivalent -NH₂) ; THF : 3 mL (37 mmol, 142,3 éq) ; tBuONO : 1.48 mL (12.48 mmol, 48 eq) ; TMS-N_{3:}1.3 mL (9.88 mmol, 38 eq).
Etape iii) : diéthylpropargylamine : 2.44 mL (17 mmol, 65.4 eq) ; Cu^{l}(CH₃CN)₄PF₆ : 96 mg (0.52 mmol, 2 eq) ; THF : 1 ml (12.3 mmol, 47 eq).

Le solide IHM-2-fonctionnalisé obtenu a été analysé par diffraction des rayons X. Le diffractogramme effectué sur le solide IHM-2-fonctionnalisé montre que ledit solide présente une structure cristalline identique à celle du solide IHM-2. L'analyse réalisée sur le solide hybride cristallisé IHM-2-fonctionnalisé par DRX démontre que le traitement de fonctionnalisation par post-modification permettant de substituer la fonction amino -NH₂ par le groupement réactif -N₃CH-C-CH₂-N-(CH₂-CH₃)₂ n'affecte pas la structure et la cristallinité du solide.

Le solide fonctionnalisé IHM-2-N₃CH-C-CH₂-N-(CH₂-CH₃)₂ est également analysé par IRTF et ¹H RMN d'une manière analogue à celle décrite dans l'exemple 1.2. La comparaison des spectres IRTF et ¹H RMN obtenus pour les solides IHM-2 et IHM-2-N₃CH-C-CH₂-N-(CH₂-CH₃)₂ permet d'estimer à 100% le taux de modification des fonctions amino -NH₂ en groupements réactifs -N₃CH-C-CH₂-N-(CH₂-CH₃)₂. Le taux de modification des fonctions azotures N₃ en groupements réactifs est donné dans le tableau 1.

### Exemple 4.4 : préparation d'un solide fonctionnalisé portant une fonction constituée par un hétérocycle C₅H₄N sur le cycle triazole, en utilisant le réactif 2-éthynylpyridine comme réactif à fonction alcyne terminale.

Cet exemple est réalisé dans les mêmes conditions opératoires que l'exemple 4.2. On utilise le 2-éthynylpyridine (C₅H₄N)CCH à la place du phénylacétylène

Les quantités introduites de chacun des réactifs sont les suivantes :
Etape i) : IHM-2 : 80 mg (0,26 mmol équivalent -NH₂) ; THF : 3 mL (37 mmol, 142,3 éq) ; tBuONO : 1.48 mL (12.48 mmol, 48 eq) ; TMS-N_{3:}1.3 mL (9.88 mmol, 38 eq).
Etape iii) : 2-éthynylpyridine : 0.84 ml (8.3 mmol, 32 eq) ; Cu^{l}(CH₃CN)₄PF₆ : 48 mg (0.26 mmol, 1 eq) ; THF : 1 ml (12.3 mmol, 47 eq).

Le solide IHM-2-fonctionnalisé obtenu a été analysé par diffraction des rayons X. Le diffractogramme effectué sur le solide IHM-2-fonctionnalisé montre que ledit solide présente une structure cristalline identique à celle du solide IHM-2. L'analyse réalisée sur le solide hybride cristallisé IHM-2-fonctionnalisé par DRX démontre que le traitement de fonctionnalisation par post-modification permettant de substituer la fonction amino -NH₂ par le groupement réactif -N₃CH-C-C₅H₄N n'affecte pas la structure et la cristallinité du solide.

Le solide fonctionnalisé IHM-2-N₃CH-C-C_{S}H₄N est également analysé par IRTF et ¹H RMN d'une manière analogue à celle décrite dans l'exemple 1.2. La comparaison des spectres IRTF et ¹H RMN obtenus pour les solides IHM-2 et IHM-2-N₃CH-C-C₅H₄N permet d'estimer à 100% le taux de modification des fonctions amino -NH₂ en groupements réactifs -N₃CH-C-C₅H₄N. Le taux de modification des fonctions azotures N₃ en groupements réactifs -N₃CH-C-C₅H₄N est donné dans le tableau 1.

**Tableau 1 : taux de modification des fonctions azotures N₃ présentes dans le solide intermédiaire en groupements réactifs présents dans le solide fonctionnalisé.**

| solide MOF-NH₂ de départ | Greffon Phenylacétylène C₆H₅CCH | Greffon diéthylpropargylamine (CH₃CH₂)₂N-CH₂-CCH | Greffon 2-éthynylpyridine (C₅H₄N)CCH |
|---|---|---|---|
| DMOF-1-NH₂ | 100 | 90 | 80 |
| MIL-53-Al-NH₂ | 92 | - | 64 |
| CAU-1 | 100 | 81 | 50 |
| IHM-2 | 77 | 73 | 20 |

On rappelle que le taux de modification des fonctions azoture N₃ en groupements réactifs-N₃-CH-CR, illustré dans le tableau 1, est calculé en quantifiant la décroissance de l'aire relative des signaux des protons aromatiques du solide intermédiaire par rapport à ceux du solide fonctionnalisé.

Les résultats figurant dans le tableau 1 démontrent que le procédé selon l'invention peut conduire soit à une substitution totale ou au moins très élevée (taux de substitution = 77, 80, 90, 92%) des fonctions azotures -N₃ en groupements réactifs soit à une substitution partielle des fonctions azotures -N₃ en groupements réactifs. Le contrôle du taux de modification des fonctions azotures N₃ en groupements réactifs constitue un avantage essentiel du procédé de l'invention.

## Revendications

1. Procédé de préparation d'un solide fonctionnalisé hybride à matrice organique-inorganique, cristallisé, portant au moins un groupement réactif à base d'un cycle triazole, à partir d'un solide hybride cristallisé à matrice organique-inorganique, MOF-NH₂, contenant un réseau inorganique de centres métalliques connectés entre eux au moins par des ligands organiques comprenant au moins un cycle aromatique, au moins deux fonctions carboxylates CO₂⁻ et au moins une fonction amine -NH₂, ledit procédé comprenant au moins les étapes successives suivantes :
i/ l'introduction, dans un solvant polaire S1, dudit solide hybride cristallisé MOF-NH₂, d'au moins un composé organique Q contenant une fonction azoture N₃ et d'au moins un réactif intermédiaire R contenant une fonction nitrite NO₂ dans une proportion telle que le mélange réactionnel présente la composition molaire suivante, basée sur un équivalent molaire de la fonction -NH₂ présente dans le solide MOF-NH₂ :
1 MOF-NH₂ : 1-150 R : 1-150 Q : 100-400 S1
ii/ la réaction dudit mélange réactionnel à une température comprise entre 0 et 100 °C pendant une durée comprise entre 1 et 24 heures,
iii/ l'introduction, dans le milieu réactionnel, d'au moins un réactif A comportant au moins une fonction terminale alcyne ou cyanure activée COCN, d'au moins un catalyseur C à base de cuivre et d'au moins un solvant polaire S2 dans une proportion telle que le mélange réactionnel présente la composition suivante, basée sur un équivalent molaire de la fonction -NH₂ présente initialement dans le solide MOF-NH₂ :
1 MOF-NH₂ : 0.1-10 C : 1-150 R : 1-150 Q : 1-150 A : 100 - 600 (S1 + S2)
iv/ la réaction dudit mélange réactionnel à une température comprise entre 0 et 100°C pendant une durée comprise entre 1 et 48 heures,
v/ la filtration puis le lavage dudit solide fonctionnalisé hybride cristallisé,
vi/ le séchage dudit solide fonctionnalisé hybride cristallisé.

2. Procédé de préparation d'un solide fonctionnalisé selon la revendication 1 tel que ledit groupement réactif à base dudit cycle triazole présente la formule brute -N₃-CH-CR, où R est une fonction choisie parmi les fonctions benzyle, phényle, hétérocycle aromatique et amine.

3. Procédé de préparation d'un solide fonctionnalisé selon la revendication 1 ou la revendication 2 tel que ledit solide fonctionnalisé présente une structure cristalline identique à celle du solide MOF-NH₂ dont il est issu.

4. Procédé de préparation selon l'une des revendications 1 à 3 tel que lesdits ligands organiques présents dans ledit solide MOF-NH₂ sont formés par l'entité 2-aminotéréphtalate -O₂C-C₆H₃-NH₂-CO₂ (ligand NH₂-bdc).

5. Procédé de préparation selon la revendication 4 tel que ledit solide MOF-NH₂, utilisé pour la mise en oeuvre de ladite étape i), est choisi parmi les solides Fe(OH)(NH₂-bdc), Fe₃O(solv)₃Cl(NH₂-bdc)₃, Zn₃(NH₂-bdc)₃(H₂O)_{2,} Zn₂(NH₂-bdc)₂(dabco), Al(OH)(NH₂-bdc), Al₄(OH)₂(OCH₃)₄(NH₂-bdc)₃ Zn₄O(NH₂-bdc)₃ et In(OH)(NH₂-bdc).

6. Procédé de préparation selon l'une des revendications 1 à 5 tel que ledit solide hybride cristallisé MOF-NH₂ est préalablement séché avant d'être introduit dans ledit solvant polaire S1.

7. Procédé de préparation selon l'une des revendications 1 à 6 tel que ledit composé organique Q, utilisé pour la mise en oeuvre de ladite étape i), est choisi parmi l'azoture de triméthylsilyle ((CH₃)₃SiN₃), l'azoture de triflyle (TfN₃, où Tf = CF₃SO₂), l'azoture de p-tosyle (C₆H₄(CH₃)SO₂N₃) et l'azoture de sodium (NaN₃).

8. Procédé de préparation selon l'une des revendications 1 à 7 tel que ledit réactif intermédiaire R contenant une fonction nitrite NO₂, utilisé pour la mise en oeuvre de ladite étape i), est le tert-butyl-nitrite (tBuONO).

9. Procédé de préparation selon l'une des revendications 1 à 8 tel que le réactif A, utilisé pour la mise en oeuvre de ladite étape iii), comporte à la fois au moins une fonction terminale alcyne ou cyanure activée COCN et une fonction R choisie parmi les fonctions benzyle, phényle, hétérocycle aromatique et amine.

10. Procédé de préparation selon la revendication 9 tel que ledit réactif A est choisi parmi le phénylacétylène, le 2-éthynylpyridine (C₆H₅CCH), le diéthylpropargylamine ((CH₃CH₂)₂N-CH₂CCH) et le cyanure de benzoyle (C₆H₅COCN).

11. Procédé de préparation selon l'une des revendications 1 à 10 tel que ladite étape iii) est réalisée en présence de plusieurs réactifs A présentant chacun une fonction R différente les unes des autres.

12. Procédé de préparation selon l'une des revendications 1 à 11 tel que ledit catalyseur C à base de cuivre, utilisé pour la mise en oeuvre de ladite étape iii), est choisi parmi les composés du cuivre présentant un degré d'oxydation du cuivre égal à 1 (Cu(I)) ou présentant un degré d'oxydation du cuivre égal à 2 (Cu(II)) en présence d'un agent réducteur.

13. Procédé de préparation selon la revendication 12 tel que ledit catalyseur C est choisi parmi les composés du cuivre présentant un degré d'oxydation du cuivre égal à 1 (Cu(I)).

14. Procédé de préparation selon l'une des revendications 1 à 13 tel que lesdits solvants polaires S1 et S2 sont choisis de même composition chimique ou de composition chimique différente.

15. Procédé de préparation selon l'une des revendications 1 à 14 tel que ladite étape de réaction iv) est réalisée à une température comprise entre 0 et 60°C.

## Patentansprüche

1. Verfahren zur Herstellung eines funktionalisierten Hybridfeststoffs mit organisch-anorganischer, kristallisierter Matrix, der mindestens eine reaktive Gruppe auf der Basis eines Triazolrings trägt, aus einem kristallisierten Hybridfeststoff mit organisch-anorganischer Matrix MOF-NH₂, enthaltend ein anorganisches Netzwerk mit Metallzentren, die mindestens durch organische Liganden miteinander verbunden sind, umfassend mindestens einen aromatischen Ring, mindestens zwei Carboxylatfunktionen CO-₂ und mindestens eine Aminfunktion -NH₂, wobei das Verfahren mindestens die folgenden Abfolge von Schritten umfasst:
i/ Einführen, in ein polares Lösemittel S1, des kristallisierten Hybridfeststoffs MOF-NH₂, mindestens einer organischen Verbindung Q, enthaltend eine Azidfunktion N₃ und mindestens ein Zwischenreagens R, enthaltend eine Nitritfunktion NO₂ in einem Anteil, dass das Reaktionsgemisch die folgende Molzusammensetzung aufweist, basierend auf einem Moläquivalent der Funktion -NH₂, die in dem Feststoff MOF-NH₂ vorhanden ist:
1 MOF-NH₂ : 1-150 R : 1-150 Q : 100-400 S1
ii/ Umsetzen des Reaktionsgemischs bei einer Temperatur im Bereich zwischen 0 und 100 °C für einen Zeitraum im Bereich zwischen 1 und 24 Stunden,
iii/ Einführen in das Reaktionsmedium mindestens eines Reagens A, umfassend mindestens eine terminale Alkin- oder aktivierte Cyanidfunktion COCN, mindestens einen Katalysator C auf Kupferbasis und mindestens ein polares Lösemittel S2 in einem Anteil, dass das Reaktionsgemisch die folgende Zusammensetzung aufweist, basierend auf einem Moläquivalent der Funktion -NH₂, das ursprünglich in dem Feststoff MOF-NH₂ vorhanden war:
1 MOF-NH₂: 0,1-10 C : 1-150 R : 1-150 Q : 1-150 A: 100-600 (S1 + S2)
iv/ Umsetzen des Reaktionsgemischs bei einer Temperatur im Bereich zwischen 0 und 100 °C für einen Zeitraum im Bereich zwischen 1 und 48 Stunden,
v/ Filtrieren, dann Waschen des kristallisierten, funktionalisierten Hybridfeststoffs,
vi/ Trocknen des kristallisierten, funktionalisierten Hybridfeststoffs.

2. Verfahren zur Herstellung eines funktionalisierten Feststoffs nach Anspruch 1, wobei die reaktive Gruppe auf der Basis des Triazolrings die Bruttoformel -N₃-CH-CR aufweist, worin R für eine Funktion steht, ausgewählt aus den Funktionen Benzyl, Phenyl, aromatischer Heterocyclus und Aminosäure.

3. Verfahren zur Herstellung eines funktionalisierten Feststoffs nach Anspruch 1 oder Anspruch 2, wobei der funktionalisierte Feststoff eine Kristallstruktur aufweist, die mit der des Feststoffs MOF-NH₂, aus dem er stammt, identisch ist.

4. Verfahren zur Herstellung nach einem der Ansprüche 1 bis 3, wobei die organischen Liganden, die in dem Feststoff MOF-NH₂ vorhanden sind, von der Spezies 2-Aminoterephtalat, -O₂C-C₆H₃-NH₂-CO₂ (Ligand NH₂-bdc), gebildet werden.

5. Verfahren zur Herstellung nach Anspruch 4, wobei der Feststoff MOF-NH₂, der für die Durchführung von Schritt i) verwendet wird, ausgewählt ist aus den Feststoffen Fe(OH)(NH₂-bdc), Fe₃O(solv)₃Cl(NH₂-bdc)₃, Zn₃(NH₂-bdc)₃(H₂O)₂, Zn₂(NH₂-bdc)₂(dabco), Al(OH)(NH₂-bdc), Al₄(OHMOCH₃)₄(NH₂-bdc)₃ Zn₄O(NH₂-bdc)₃ und In(OH)(NH₂-bdc).

6. Verfahren zur Herstellung nach einem der Ansprüche 1 bis 5, wobei der kristallisierte Hybridfeststoff MOF-NH₂ zuvor getrocknet wird, bevor er in das polare Lösemittel S1 eingeführt wird.

7. Verfahren zur Herstellung nach einem der Ansprüche 1 bis 6, wobei die organische Verbindung Q, die für die Durchführung von Schritt i) verwendet wird, ausgewählt ist aus Trimethylsilylazid ((CH₃)₃SiN₃), Triflylazid (TfN₃, worin Tf = CF₃SO₂), p-Tosylazid (C₆H₄(CH₃)SO₂N₃) und Natriumazid (NaN₃).

8. Verfahren zur Herstellung nach einem der Ansprüche 1 bis 7, wobei das Zwischenreagens R, das eine Nitritfunktion NO₂ enthält, das für die Durchführung von Schritt i) verwendet wird, tert-Butylnitrit (tBuONO) ist.

9. Verfahren zur Herstellung nach einem der Ansprüche 1 bis 8, wobei das Reagens A, das für die Durchführung von Schritt iii) verwendet wird, gleichzeitig mindestens eine terminale Alkin- oder aktivierte Cyanidfunktion COCN und eine Funktion R, ausgewählt aus den Funktionen Benzyl, Phenyl, aromatischer Heterocyclus und Aminosäure, umfasst.

10. Verfahren zur Herstellung nach Anspruch 9, wobei das Reagens A ausgewählt ist aus Phenylacetylen, 2-Ethynylpyridin (C₆H₅CCH), Diethylpropargylamin ((CH₃CH₂)₂N-CH₂CCH) und Benzoylcyanid (C₆H₅COCN).

11. Verfahren zur Herstellung nach einem der Ansprüche 1 bis 10, wobei der Schritt iii) in Gegenwart von mehreren Reagenzien A ausgeführt wird, die jeweils eine Funktion R aufweisen, die voneinander verschieden sind.

12. Verfahren zur Herstellung nach einem der Ansprüche 1 bis 11, wobei der Katalysator C auf Kupferbasis, der für die Durchführung von Schritt iii) verwendet wird, ausgewählt ist aus den Kupferverbindungen, die ein Kupfer mit Oxidationszahl gleich 1 (Cu(I)) aufweisen, oder die ein Kupfer mit einer Oxidationszahl gleich 2 (Cu(II)) aufweisen, in Gegenwart eines Reduktionsmittels.

13. Verfahren zur Herstellung nach Anspruch 12, wobei der Katalysator C ausgewählt ist aus den Kupferverbindungen, die ein Kupfer mit Oxidationszahl gleich 1 (Cu(I)) aufweisen.

14. Verfahren zur Herstellung nach einem der Ansprüche 1 bis 13, wobei die polaren Lösemittel S1 und S2 aus der gleichen chemischen Zusammensetzung oder aus einer anderen chemischen Zusammensetzung ausgewählt sind.

15. Verfahren zur Herstellung nach einem der Ansprüche 1 bis 14, wobei der Umsetzungsschritt iv) bei einer Temperatur im Bereich zwischen 0 und 60 °C ausgeführt wird.

## Claims

1. Process for the preparation of a functionalized hybrid solid with an organic-inorganic matrix, crystallized, bearing at least one reactive group based on a triazole ring, from a crystallized hybrid solid with an organic-inorganic matrix, MOF-NH₂, containing an inorganic network of metallic sites joined together at least by organic ligands comprising at least one aromatic ring, at least two carboxylate functions CO₂⁻ and at least one amine function -NH₂, said process comprising at least the following successive stages:
i/ introduction, in a polar solvent S1, of said crystallized hybrid solid MOF-NH₂, at least one organic compound Q containing a nitride function N₃ and at least one intermediate reagent R containing a nitrite function NO₂ in proportions such that the reaction mixture has the following molar composition, based on one molar equivalent of the function -NH₂ present in the solid MOF-NH₂:
1 MOF-NH₂ : 1-150 R : 1-150 Q : 100-400 S1
ii/ reaction of said reaction mixture at a temperature between 0 and 100°C for a time between 1 and 24 hours,
iii/ introduction, in the reaction mixture, of at least one reagent A comprising at least one alkyne or activated cyanide COCN terminal function, at least one copper-based catalyst C and at least one polar solvent S2 in proportions such that the reaction mixture has the following composition, based on one molar equivalent of the function -NH₂ present initially in the solid MOF-NH₂:
1 MOF-NH₂ : 0.1-10 C : 1-150 R: 1-150 Q : 1-150 A: 100 - 600 (S1 + S2)
iv/ reaction of said reaction mixture at a temperature between 0 and 100°C for a time between 1 and 48 hours,
v/ filtration and then washing of said crystallized functionalized hybrid solid,
vi/ drying of said crystallized functionalized hybrid solid.

2. Process for the preparation of a functionalized solid according to claim 1, **characterized in that** said reactive group based on said triazole ring has the empirical formula -N₃-CH-CR, where R is a function selected from the benzyl, phenyl, aromatic heterocycle and amine functions.

3. Process for the preparation of a functionalized solid according to claim 1 or 2, **characterized in that** said functionalized solid has a crystalline structure identical to that of the solid MOF-NH₂ from which it is derived.

4. Preparation process according to one of claims 1 to 3, **characterized in that** said organic ligands present in said solid MOF-NH₂ are formed by the entity 2-aminoterephthalate-O₂C-C₆H₃-NH₂-CO₂ (ligand NH₂-bdc).

5. Preparation process according to claim 4, **characterized in that** said solid MOF-NH₂, used for implementing said stage i), is selected from the solids Fe(OH)(NH₂-bdc), Fe₃O(solv)₃Cl(NH₂-bdc)₃, Zn₃(NH₂-bdc)₃(H₂O)₂, Zn₂(NH₂-bdc)₂(dabco), Al(OH)(NH₂-bdc), Al₄(OH)₂(OCH₃)₄(NH₂-bdc)₃ Zn₄O(NH₂-bdc)₃ and In(OH)(NH₂-bdc).

6. Preparation process according to one of claims 1 to 5, **characterized in that** said crystallized hybrid solid MOF-NH₂ is previously dried before being introduced into said polar solvent S1.

7. Preparation process according to one of claims 1 to 6, **characterized in that** said organic compound Q, used for implementing said stage i), is selected from trimethylsilyl nitride ((CH₃)₃SiN₃), triflyl nitride (TfN₃, where Tf = CF₃SO₂), p-tosyl nitride (C₆H₄(CH₃)SO₂N₃) and sodium nitride (NaN₃).

8. Preparation process according to one of claims 1 to 7, **characterized in that** said intermediate reagent R containing a nitrite function NO₂, used for implementing said stage i), is tert-butyl-nitrite (tBuONO).

9. Preparation process according to one of claims 1 to 8, **characterized in that** reagent A, used for implementing said stage iii), comprises simultaneously at least one alkyne or activated cyanide COCN terminal function and a function R selected from the benzyl, phenyl, aromatic heterocycle and amine functions.

10. Preparation process according to claim 9, **characterized in that** said reagent A is selected from phenylacetylene, 2-ethynylpyridine (C₆H₅CCH), diethylpropargyl amine ((CH₃CH₂)₂N-CH₂CCH) and benzoyl cyanide (C₆H₅COCN).

11. Preparation process according to one of claims 1 to 10, **characterized in that** said stage iii) is carried out in the presence of several reagents A each having a function R different from one other.

12. Preparation process according to one of claims 1 to 11, **characterized in that** said copper-based catalyst C, used for implementing said stage iii), is selected from the copper compounds having an oxidation number of the copper equal to 1 (Cu(I)) or having an oxidation number of the copper equal to 2 (Cu(II)) in the presence of a reducing agent.

13. Preparation process according to claim 12, **characterized in that** said catalyst C is selected from the copper compounds having an oxidation number of the copper equal to 1 (Cu(I)).

14. Preparation process according to one of claims 1 to 13, **characterized in that** said polar solvents S1 and S2 are selected with the same chemical composition or with different chemical composition.

15. Preparation process according to one of claims 1 to 14, **characterized in that** said reaction stage iv) is carried out at a temperature between 0 and 60°C.
